(19) Europäisches Patentamt
European Patent Office
Office européen des brevets

(11) **EP 4 207 860 A1**

(12) **EUROPEAN PATENT APPLICATION**
published in accordance with Art. 153(4) EPC

(43) Date of publication:
**05.07.2023 Bulletin 2023/27**

(21) Application number: **21870751.1**

(22) Date of filing: **02.04.2021**

(51) International Patent Classification (IPC):
**H04W 24/02** (2009.01)

(52) Cooperative Patent Classification (CPC):
**H04W 24/02; H04W 28/02**

(86) International application number:
**PCT/CN2021/085428**

(87) International publication number:
**WO 2022/062362 (31.03.2022 Gazette 2022/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.09.2020 PCT/CN2020/117940**

(71) Applicant: **Huawei Technologies Co., Ltd.
Shenzhen, Guangdong 518129 (CN)**

(72) Inventors:
• **HUANG, Xietian**
  **Shenzhen, Guangdong 518129 (CN)**
• **QIN, Dongrun**
  **Shenzhen, Guangdong 518129 (CN)**
• **WANG, Chujie**
  **Shenzhen, Guangdong 518129 (CN)**
• **XIN, Yang**
  **Shenzhen, Guangdong 518129 (CN)**

(74) Representative: **Körber, Martin Hans
Mitscherlich PartmbB
Patent- und Rechtsanwälte
Sonnenstraße 33
80331 München (DE)**

(54) **COMMUNICATION METHOD, APPARATUS AND SYSTEM**

(57)     Embodiments of this application provide a communication method, apparatus, and system. The method includes: A first data analytics network element receives first information from a second data analytics network element, where the first information includes a performance report of a model. The first data analytics network element updates first model information of the model based on the performance report of the model, to obtain second model information of the model. The first data analytics network element sends second information to the second data analytics network element, where the second information includes the second model information. In this solution, when the second data analytics network element cannot complete model training, the second data analytics network element sends the performance report of the model to the first data analytics network element, the first data analytics network element updates the model based on the performance report of the model, to obtain the second model information of the model, and sends the second model information to the second data analytics network element, and the second data analytics network element updates the model based on the second model information, so that the model is trained and updated in time when model performance deteriorates, to ensure the model performance.

FIG. 13

**Description**

**CROSS-REFERENCE TO RELATED APPLICATION**

This application claims priority to Chinese Patent Application No. PCT/CN2020/117940, filed with the China National Intellectual Property Administration on September 25, 2020 and entitled "COMMUNICATION METHOD, APPARATUS, AND SYSTEM", which is incorporated herein by reference in its entirety.

**TECHNICAL FIELD**

This application relates to the field of communication technologies, and in particular, to a communication method, apparatus, and system.

**BACKGROUND**

A machine learning model is usually trained by learning a mapping between a group of input features and output targets, and an error between an output result (namely, a predicted value) of the machine learning model and an actual result (namely, a label value/a real value) is minimized by optimizing some loss functions. After an optimal model is obtained through training, a future status is predicted by using an output of the model. In an ideal case, it is assumed that data to be used in the future is similar to data used during model training. Specifically, it may be assumed that distribution of input features during training and input features during prediction remains constant. However, in practice, this assumption is usually not true. The features of the data change with time due to changes in network deployment, an application-layer service requirement, actual network user distribution, and the like. Therefore, performance (namely, a generalization capability) of the model gradually deteriorates with time. A specific manifestation may be that accuracy of the model decreases, in other words, the error between the predicted value of the model and the real value becomes larger.

A scenario in which a training function of a data analytics network element is separated from an inference function of a data analytics network element is used as an example. The data analytics network element supporting the training function (referred to as a training data analytics network element for short) cannot sense a model use effect in the data analytics network element supporting the inference function (referred to as an inference data analytics network element for short), and the inference data analytics network element is incapable of performing model training. Therefore, when model performance deteriorates, if the inference data analytics network element continues to use the model whose performance deteriorates to perform data analysis, it leads to an inaccurate data analysis result.

**SUMMARY**

This application provides a communication method, apparatus, and system, to retrain a model in time when model performance deteriorates, to ensure the model performance.

According to a first aspect, an embodiment of this application provides a communication method, including: A first data analytics network element receives first information from a second data analytics network element, where the first information includes a performance report of a model, and the performance report of the model indicates a performance evaluation result of the model, or the performance report of the model indicates that a performance evaluation result of the model does not meet a requirement for a performance indicator of the model. The first data analytics network element updates first model information of the model based on the performance report of the model, to obtain second model information of the model. The first data analytics network element sends second information to the second data analytics network element, where the second information includes the second model information.

Based on the foregoing solution, when the second data analytics network element cannot complete model training, the second data analytics network element may send the performance report of the model to the first data analytics network element, the first data analytics network element may update the model based on the performance report of the model, to obtain the second model information of the model, and send the second model information to the second data analytics network element, and the second data analytics network element may update the model based on the second model information, so that the model can be trained in time when model performance deteriorates, to ensure the model performance.

In a possible implementation, the first data analytics network element sends third information to the second data analytics network element, where the third information includes the performance indicator of the model, and the performance indicator of the model is used to obtain the performance evaluation result of the model.

Based on the foregoing solution, the first data analytics network element may send the performance indicator of the model to the second data analytics network element in advance, so that the second data analytics network element generates the performance report of the model based on the performance indicator of the model. This helps the first data analytics network element determine whether to start model training, and improves performance of the model after the model training.

In a possible implementation, the first data analytics network element sends the second information to a third data analytics network element.

Based on the foregoing solution, the first data analytics network element may not only send the second information to the second data analytics network element, but also send the second information to another network element that uses the model, for example, the third data analytics network element, so that the third data analytics network element may also update the model by using the second model information. This improves a model use effect.

In a possible implementation, that a first data analytics network element receives first information from a second data analytics network element includes: The first data analytics network element receives the first information from the second data analytics network element by using a network repository network element. That the first data analytics network element sends second information to the second data analytics network element includes: The first data analytics network element sends the second information to the second data analytics network element by using the network repository network element.

Based on the foregoing solution, model update interaction between the first data analytics network element and the second data analytics network element may be implemented by using the network repository network element as an intermediate network element. This is applicable to a scenario in which there is no interface between the first data analytics network element and the second data analytics network element.

According to a second aspect, an embodiment of this application provides a communication method, including: A second data analytics network element sends first information to a first data analytics network element, where the first information includes a performance report of a model, and the performance report of the model indicates a performance evaluation result of the model, or the performance report of the model indicates that a performance evaluation result of the model does not meet a requirement for a performance indicator of the model. The second data analytics network element receives second information from the first data analytics network element, where the second information includes second model information of the model, and the second model information is obtained by updating first model information of the model based on the performance report of the model. The second data analytics network element updates the model based on the second model information.

Based on the foregoing solution, when the second data analytics network element cannot complete model training, the second data analytics network element may send the performance report of the model to the first data analytics network element, the first data analytics network element may update the model based on the performance report of the model, to obtain the second model information of the model, and send the second model information to the second data analytics network element, and the second data analytics network element may update the model based on the second model information, so that the model can be retrained in time when model performance deteriorates, to ensure the model performance.

In a possible implementation, the second data analytics network element receives third information from the first data analytics network element, where the third information includes the performance indicator of the model, and the performance indicator of the model is used to obtain the performance evaluation result of the model.

Based on the foregoing solution, the first data analytics network element may send the performance indicator of the model to the second data analytics network element in advance, so that the second data analytics network element generates the performance report of the model based on the performance indicator of the model. This helps the first data analytics network element determine whether to start model training, and improves accuracy of the model training.

In a possible implementation, that a second data analytics network element sends first information to a first data analytics network element includes: The second data analytics network element sends the first information to the first data analytics network element by using a network repository network element. That the second data analytics network element receives second information from the first data analytics network element includes: The second data analytics network element receives the second information from the first data analytics network element by using the network repository network element.

Based on the foregoing solution, model update interaction between the first data analytics network element and the second data analytics network element may be implemented by using the network repository network element as an intermediate network element. This is applicable to a scenario in which there is no interface between the first data analytics network element and the second data analytics network element.

Based on the first aspect, the possible implementations of the first aspect, the second aspect, or the possible implementations of the second aspect:

In a possible implementation, the performance indicator of the model includes one or more of the following: precision, accuracy, error rate, recall rate, F1 score, mean squared error, root mean squared error, root mean squared logarithmic error, mean absolute error, model inference duration, model robustness, model expandability, and model interpretability.

In a possible implementation, the third information further includes one or more of the following: an analytics type identifier, an identifier of the model, and an identifier of a submodel, where the analytics type identifier indicates an analytics type of the model.

In a possible implementation, the third information further includes one or both of the following: a reporting periodicity and threshold information, where the reporting periodicity indicates a time point at which the performance report of the model is reported, and the threshold information indicates a condition for reporting the performance report of the model.

Based on the foregoing solution, the first data analytics network element may indicate the time point at which the second data analytics network element reports the performance report of the model and/or the condition, so that conditional reporting is implemented. This can reduce resource overheads.

In a possible implementation, the first information further includes one or more of the following information corresponding to the performance report of the model: time, an area, and a slice.

Based on the foregoing solution, when the first information further includes the time, the area, or the slice corresponding to the performance report of the model, model performance obtained after the first data analytics network element performs model retraining can be improved.

In a possible implementation, the second information further includes one or more of the following: the identifier of the model, the identifier of the submodel, the performance evaluation result of the model, hardware capability information corresponding to the performance evaluation result of the model, a size of the model, and the model inference duration.

Based on the foregoing solution, the first data analytics network element sends one or more of the performance evaluation result of the model, the hardware capability information corresponding to the performance evaluation result of the model, the size of the model, or the model inference duration to the second data analytics network element. This helps the second data analytics network element determine whether to use the model, to reduce a waste of resource overheads.

According to a third aspect, an embodiment of this application provides a communication method, including: A first data analytics network element updates first information of a model to second information of the model. The first data analytics network element determines index information of the second information of the model, where the index information of the second information includes first identifier information, and the first identifier information indicates the second information of the model. The first data analytics network element sends the index information of the second information to a second data analytics network element, where the index information of the second information is used to obtain the second information of the model. The index information of the second information of the model may also be referred to as model index information corresponding to the second information.

Based on the foregoing solution, after updating the model to obtain the second information of the model, the first data analytics network element may send the index information of the second information to the second data analytics network element, so that the second data analytics network element may obtain, based on the index information, new model information, namely, the second information, and the second data analytics network element may update the model based on the new model information. This improves model performance.

In a possible implementation, the index information of the second information further includes one or more of the following: an analytics type identifier corresponding to the model, an identifier of the model, or version information of the second information of the model.

In a possible implementation, the first data analytics network element receives index information of the first information of the model from the second data analytics network element, where the index information of the first information includes second identifier information, and the second identifier information indicates the first information of the model. The first data analytics network element obtains the first information of the model based on the index information of the first information.

In a possible implementation, the index information of the first information further includes one or more of the following: the analytics type identifier corresponding to the model, the identifier of the model, or version information of the first information of the model.

In a possible implementation, that a first data analytics network element updates first information of a model to second information of the model includes: The first data analytics network element obtains a first request from the second data analytics network element, where the first request is used to update the first information of the model, and the first request includes index information of the first information of the model. The first data analytics network element obtains the first information of the model based on the index information of the first information. The first data analytics network element updates the first information of the model to obtain the second information of the model.

In a possible implementation, that the first data analytics network element receives index information of the first information of the model from the second data analytics network element includes: The first data analytics network element sends a second request to the second data analytics network element, where the second request requests the index information of the first information of the model, and the second request includes the analytics type identifier corresponding to the model. The first data analytics network element receives a second response from the second data analytics network element, where the second response includes the index information of the first information of the model.

In a possible implementation, the first data analytics network element receives the index information of the first information of the model from the second data analytics network element by using a network repository network element.

In a possible implementation, the first data analytics network element sends the index information of the second information of the model to the second data analytics network element by using the network repository network element.

In a possible implementation, the first data analytics network element is a client data analytics network element in distributed learning, and the second data analytics network element is a server data analytics network element in distributed learning.

In a possible implementation, the distributed learning is federated learning.

In a possible implementation, the first data analytics network element is a data analytics network element supporting an inference function, and the second data analytics network element is a data analytics network element supporting a training function.

According to a fourth aspect, an embodiment of this application provides a communication method, including: A second data analytics network element sends a first request to a first data analytics network element, where the first request carries an analytics type identifier and second model requirement information, and the first request requests model index information of a model that corresponds to the analytics type identifier and meets the second model requirement information. The second data analytics network element receives the model index information from the first data analytics network element.

Based on the foregoing solution, by using the second model requirement information, the second data analytics network element may be assisted in quickly obtaining, from the first data analytics network element, the model that meets the second model requirement information as much as possible, so that the model can be precisely provided for the second data analytics network element.

In a possible implementation, the second data analytics network element sends a network function discovery request to a network repository network element, where the network function discovery request includes the analytics type identifier and first model requirement information, and the network function discovery request requests to obtain a data analytics network element that can provide a model corresponding to the analytics type identifier and meeting the first model requirement information. The second data analytics network element receives address information of the first data analytics network element from the network repository network element.

In a possible implementation, the first model requirement information includes one or more of the following information: analytics filter information, a target of analytics reporting, model performance information, or model deployment environment information, where

the analytics filter information indicates an applicable range of a model that the second data analytics network element needs to request, and the analytics filter information includes one or more of the following: an area, a time period, single network slice selection assistance information, or a data network name;

the target of analytics reporting indicates a terminal corresponding to the model that the second data analytics network element needs to request, and the target of analytics reporting includes one or more of the following: an identifier of the terminal, an identifier of a terminal group, or information indicating any terminal;

the model performance information indicates performance of the model that the second data analytics network element needs to request, and the model performance information includes one or more of the following: precision, accuracy, error rate, recall rate, F1 score, mean squared error, root mean squared error, root mean squared logarithmic error, mean absolute error, model inference duration, model robustness, model expandability, and model interpretability; and

the model deployment environment information indicates a hardware environment in which the model that the second data analytics network element needs to request is deployed, and the model deployment environment information includes one or more of the following: a quantity of central processing units, a quantity of graphics processing units, a memory size, or a hard disk size.

In a possible implementation, the second model requirement information includes a part or all of the first model requirement information.

In a possible implementation, the second model requirement information includes time information, where the time information indicates a time point at which the model index information from the first data analytics network element is expected to be received.

In a possible implementation, the second data analytics network element receives first indication information from the first data analytics network element, where the first indication information indicates that the model index information cannot be sent before the time point indicated by the time information.

According to a fifth aspect, an embodiment of this application provides a communication method, including: A first data analytics network element receives a first request from a second data analytics network element, where the first request carries an analytics type identifier and second model requirement information, and the first request requests model index information of a model that corresponds to the analytics type identifier and meets the second model requirement information. The first data analytics network element obtains the model index information based on the second model requirement information and the analytics type identifier. The first data analytics network element sends the model index information to the second data analytics network element.

Based on the foregoing solution, by using the second model requirement information, the second data analytics network element may be assisted in quickly obtaining, from the first data analytics network element, the model that meets the second model requirement information as much as possible, so that the model can be precisely provided for the second data analytics network element.

In a possible implementation, the second model requirement information includes time information, where the time information indicates a time point at which the model index information from the first data analytics network element is expected to be received.

In a possible implementation, the first data analytics network element sends first indication information to the second data analytics network element, where the first indication information indicates that the model index information cannot be sent before the time point indicated by the time information.

In a possible implementation, the first data analytics network element sends a network function registration request to a network repository network element, where the network function registration request carries the analytics type identifier and model information, the model information includes second indication information, and the second indication information indicates whether training of the model corresponding to the analytics type identifier has been completed or is ready to be completed.

In a possible implementation, when the second indication information indicates that the training of the model corresponding to the analytics type identifier has been completed or is ready to be completed, the model information further includes model description information, and the model description information includes one or more of the following information: analytics filter information, a target of analytics reporting, model performance information, or model deployment environment information, where

the analytics filter information indicates an applicable range of a model corresponding to the analytics type identifier, and the analytics filter information includes one or more of the following: an area, a time period, single network slice selection assistance information, or a data network name;
the target of analytics reporting indicates a terminal corresponding to the model corresponding to the analytics type identifier, and the target of analytics reporting includes one or more of the following: an identifier of the terminal, an identifier of a terminal group, or information indicating any terminal;
the model performance information indicates performance of the model corresponding to the analytics type identifier, and the model performance information includes one or more of the following: precision, accuracy, error rate, recall rate, F1 score, mean squared error, root mean squared error, root mean squared logarithmic error, mean absolute error, model inference duration, model robustness, model expandability, and model interpretability; and
the model deployment environment information indicates a hardware environment in which the model corresponding to the analytics type identifier is deployed, and the model deployment environment information includes one or more of the following: a quantity of central processing units, a quantity of graphics processing units, a memory size, or a hard disk size.

According to a sixth aspect, an embodiment of this application provides a communication method, including: A network repository network element receives a network function discovery request from a second data analytics network element, where the network function discovery request includes an analytics type identifier and first model requirement information, and the network function discovery request requests to obtain a data analytics network element that can provide a model corresponding to the analytics type identifier and meeting the first model requirement information. The network repository network element obtains address information of a first data analytics network element based on the first model requirement information and the analytics type identifier. The network repository network element sends the address information of the first data analytics network element to the second data analytics network element.

Based on the foregoing solution, by using the first model requirement information, the second data analytics network element may be assisted in quickly obtaining, from the network repository network element, the first data analytics network element that meets the first model requirement information as much as possible, so that the first data analytics network element can be precisely provided for the second data analytics network element.

In a possible implementation, the network repository network element receives a network function registration request from the first data analytics network element, where the network function registration request carries the analytics type identifier and model information, the model information includes second indication information, and the second indication information indicates whether training of the model corresponding to the analytics type identifier has been completed or is ready to be completed.

In a possible implementation, when the second indication information indicates that the training of the model corresponding to the analytics type identifier has been completed or is ready to be completed, the model information further includes model description information, and the model description information includes one or more of the following information: analytics filter information, a target of analytics reporting, model performance information, or model deployment environment information, where

the analytics filter information indicates an applicable range of a model corresponding to the analytics type identifier, and the analytics filter information includes one or more of the following: an area, a time period, single network slice selection assistance information, or a data network name;

the target of analytics reporting indicates a terminal corresponding to the model corresponding to the analytics type identifier, and the target of analytics reporting includes one or more of the following: an identifier of the terminal, an identifier of a terminal group, or information indicating any terminal;

the model performance information indicates performance of the model corresponding to the analytics type identifier, and the model performance information includes one or more of the following: precision, accuracy, error rate, recall rate, F1 score, mean squared error, root mean squared error, root mean squared logarithmic error, mean absolute error, model inference duration, model robustness, model expandability, and model interpretability; and

the model deployment environment information indicates a hardware environment in which the model corresponding to the analytics type identifier is deployed, and the model deployment environment information includes one or more of the following: a quantity of central processing units, a quantity of graphics processing units, a memory size, or a hard disk size.

In a possible implementation, the first model requirement information includes one or more of the following information: analytics filter information, a target of analytics reporting, model performance information, or model deployment environment information, where

the analytics filter information indicates an applicable range of a model that the second data analytics network element needs to request, and the analytics filter information includes one or more of the following: an area, a time period, single network slice selection assistance information, or a data network name;

the target of analytics reporting indicates a terminal corresponding to the model that the second data analytics network element needs to request, and the target of analytics reporting includes one or more of the following: an identifier of the terminal, an identifier of a terminal group, or information indicating any terminal;

the model performance information indicates performance of the model that the second data analytics network element needs to request, and the model performance information includes one or more of the following: precision, accuracy, error rate, recall rate, F1 score, mean squared error, root mean squared error, root mean squared logarithmic error, mean absolute error, model inference duration, model robustness, model expandability, and model interpretability; and

the model deployment environment information indicates a hardware environment in which the model that the second data analytics network element needs to request is deployed, and the model deployment environment information includes one or more of the following: a quantity of central processing units, a quantity of graphics processing units, a memory size, or a hard disk size.

According to a seventh aspect, an embodiment of this application provides a communication apparatus. The apparatus may be a data analytics network element, or may be a chip used in the data analytics network element. The apparatus has functions of implementing the first aspect to the sixth aspect or the possible implementations of the first aspect to the sixth aspect. The functions may be implemented by hardware, or may be implemented by hardware executing corresponding software. The hardware or the software includes one or more modules corresponding to the functions.

According to an eighth aspect, an embodiment of this application provides a communication apparatus, including a processor and a memory. The memory is configured to store computer-executable instructions. When the apparatus runs, the processor executes the computer-executable instructions stored in the memory, to enable the apparatus to perform any method in the methods in the first aspect to the sixth aspect and the possible implementations of the first aspect to the sixth aspect.

According to a ninth aspect, an embodiment of this application provides a communication apparatus, including units or means (means) configured to perform steps in any method in the methods in the first aspect to the sixth aspect and the possible implementations of the first aspect to the sixth aspect.

According to a tenth aspect, an embodiment of this application provides a communication apparatus, including a processor and an interface circuit. The processor is configured to communicate with another apparatus through the interface circuit, and perform any method in the methods in the first aspect to the sixth aspect and the possible implementations of the first aspect to the sixth aspect. There are one or more processors.

According to an eleventh aspect, an embodiment of this application provides a communication apparatus, including a processor. The processor is configured to: be connected to a memory, and invoke a program stored in the memory, to perform any method in the methods in the first aspect to the sixth aspect and the possible implementations of the first aspect to the sixth aspect. The memory may be located inside the apparatus, or may be located outside the apparatus. There are one or more processors.

According to a twelfth aspect, an embodiment of this application further provides a computer-readable storage medium. The computer-readable storage medium stores instructions. When the instructions are on a computer, a processor is enabled to perform any method in the methods in the first aspect to the sixth aspect and the possible implementations of the first aspect to the sixth aspect.

According to a thirteenth aspect, an embodiment of this application further provides a computer program product. The computer product includes a computer program. When the computer program is run, any method in the methods in the first aspect to the sixth aspect and the possible implementations of the first aspect to the sixth aspect is performed.

According to a fourteenth aspect, an embodiment of this application further provides a chip system, including a processor. The processor is configured to perform any method in the methods in the first aspect to the sixth aspect and the possible implementations of the first aspect to the sixth aspect.

According to a fifteenth aspect, an embodiment of this application further provides a communication system, including: the first data analytics network element configured to perform the method in any one of the first aspect or the implementations of the first aspect, and the second data analytics network element configured to perform the method in any one of the second aspect or the implementations of the second aspect.

According to a sixteenth aspect, an embodiment of this application further provides a communication system, including: the first data analytics network element configured to perform the method in any one of the fifth aspect or the implementations of the fifth aspect, and the second data analytics network element configured to perform the method in any one of the fourth aspect or the implementations of the fourth aspect. Optionally, the system further includes the network repository network element configured to perform the method in any one of the sixth aspect or the implementations of the sixth aspect.

## BRIEF DESCRIPTION OF DRAWINGS

FIG. 1 is a schematic diagram of a 5G network architecture;
FIG. 2 is a schematic diagram of an NF registration/discovery/update procedure in a 5G network;
FIG. 3 is a schematic diagram of a working procedure of a training NWDAF and an inference NWDAF in a training-inference separation architecture;
FIG. 4 is a schematic diagram of a network architecture to which an embodiment of this application is applicable;
FIG. 5 to FIG. 12 are schematic diagrams of eight methods for ensuring model validity in a training-inference separation scenario according to an embodiment of this application;
FIG. 13 is a schematic flowchart of a communication method according to an embodiment of this application;
FIG. 14(a) is a training process of horizontal federated learning;
FIG. 14(b) is a schematic flowchart of another communication method according to an embodiment of this application;
FIG. 14(c) is a schematic flowchart of still another communication method according to an embodiment of this application;
FIG. 15 is a schematic diagram of a communication apparatus according to an embodiment of this application; and
FIG. 16 is a schematic diagram of another communication apparatus according to an embodiment of this application.

## DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. In the descriptions of this application, unless otherwise specified, "a plurality of" means two or more than two.

A wireless machine learning model driven network (wireless Machine Learning-based Network, wMLN) architecture mainly resolves a life cycle management problem of a machine learning model in a wireless network. A training function and a model inference function in the network architecture are two core functional modules closely related to the machine learning model. The model training function has high requirements on calculation capabilities, and needs a large data amount. Usually, a centralized network element with powerful calculation capabilities and data needs to be deployed. Considering a requirement such as real-time inference, the model inference function is usually deployed in a local network element close to a service function, to reduce a transmission and processing delay. Therefore, separation of the model training function and the inference function is a typical deployment scenario.

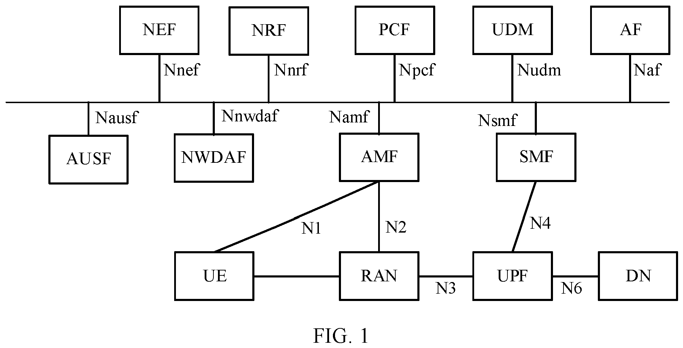

An enabler of network automation (enabler of Network Automation, eNA) architecture is an intelligent network architecture based on a network data analytics function (Network Data Analytics Function, NWDAF). As shown in FIG. 1, the NWDAF is a standardized network element introduced by the 3rd generation partnership project (3rd generation partnership project, 3GPP), may be mainly configured to collect network data (including one or more of terminal data, base station data, transmission network data, core network data, network management data, and third-party application data), provides a network data analytics service, and may output a data analysis result for a network, a network management system, and an application to execute a policy decision. The NWDAF may perform data analysis by using the machine learning model. In 3GPP Release 17, functions of the NWDAF are decomposed, and include a data collection function, a model training function, and a model inference function. In a scenario in which the training function is separated from the inference function, the training function and the inference function of a same model are separately deployed in different NWDAF instances. An NWDAF deployed with the training function (referred to as a training NWDAF for short) may provide a trained model, and an NWDAF deployed with the inference function (referred to as an inference NWDAF for short) performs model inference by obtaining the model provided by the training NWDAF, to provide a data analytics service.

A machine learning model is usually trained by learning a mapping between a group of input features and output targets, and an error between an output result (namely, a predicted value) of the machine learning model and an actual result (namely, a label value/a real value) is minimized by optimizing some loss functions. After an optimal model is obtained through training, a future status is predicted by using an output of the model. In an ideal case, it is assumed that data to be used in the future is similar to data used during model training. Specifically, it may be assumed that distribution of input features during training and input features during prediction remains constant. However, in practice, this assumption is usually not true. The features of the data change with time due to changes in network deployment, an application-layer service requirement, actual network user distribution, and the like. Therefore, performance (namely, a generalization capability) of the model gradually deteriorates with time. Specific performance may be that accuracy of the model decreases, in other words, the error between the predicted value of the model and the real value becomes large.

The 5G network architecture shown in FIG. 1 may include three parts: a terminal device, a data network (data network, DN), and a carrier network. The following briefly describes functions of some of the network elements.

The carrier network may include one or more of the following network elements: an authentication server function (Authentication Server Function, AUSF) network element, a network exposure function (network exposure function, NEF) network element, a policy control function (Policy Control Function, PCF) network element, a unified data management (unified data management, UDM), a unified data repository (Unified Data Repository, UDR), a network repository function (Network Repository Function, NRF) network element, an application function (Application Function, AF) network element, an access and mobility management function (Access and Mobility Management Function, AMF) network element, a session management function (session management function, SMF) network element, a RAN and user plane function (user plane function, UPF) network element, and an NWDAF network element. In the foregoing carrier network, a part other than a radio access network part may be referred to as a core network part.

During specific implementation, the terminal device in embodiments of this application may be a device configured to implement a wireless communication function. The terminal device may be user equipment (user equipment, UE), an access terminal, a terminal unit, a terminal station, a mobile station, a remote station, a remote terminal, a mobile device, a wireless communication device, a terminal agent, a terminal apparatus, or the like in a 5G network or a future evolved public land mobile network (public land mobile network, PLMN). The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, an in-vehicle device, a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. The terminal may be mobile or fixed.

The terminal device may establish a connection to the carrier network through an interface (for example, N1) provided by the carrier network, and use a service such as data and/or voice provided by the carrier network. The terminal device may further access a DN through the carrier network, and use a carrier service deployed on the DN and/or a service provided by a third party. The third party may be a service provider other than the carrier network and the terminal device, and may provide another service such as a data service and/or a voice service for the terminal device. A specific representation form of the third party may be specifically determined based on an actual application scenario. This is not limited herein.

As an access network element, the RAN is a sub-network of the carrier network, and is an implementation system between a service node in the carrier network and the terminal device. To access the carrier network, the terminal device first passes through the RAN, and then may be connected to the service node in the carrier network through the RAN. A RAN device in this application is a device that provides the wireless communication function for the terminal device, and the RAN device is also referred to as an access network device. The RAN device in this application includes but is not limited to: a next generation NodeB (gNodeB, gNB) in 5G, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmission reception point (transmission reception point, TRP), a transmission point (transmission point, TP), a mobile switching center, and the like.

The AMF network element mainly performs functions such as mobility management and access authentication/authorization. In addition, the AMF network element is responsible for transferring a user policy between the UE and the PCF.

The SMF network element mainly performs functions such as session management, execution of a control policy delivered by the PCF, UPF selection, and UE internet protocol (internet protocol, IP) address assignment.

The UPF network element serves as an interface UPF connecting to the data network, and implements functions such as user plane data forwarding, charging statistics based on a session/flow level, and bandwidth throttling.

The UDM network element is mainly responsible for functions such as subscription data management and user access authorization.

The UDR is mainly responsible for a function of accessing subscription data, policy data, application data, and another type of data.

The NEF is mainly configured to support capability and event exposure.

The AF network element mainly transfers a requirement of an application side on a network side, for example, a quality of service (Quality of Service, QoS) requirement or a user status event subscription. The AF may be a third-party functional entity, or may be a carrier-deployed application service, for example, an IP multimedia subsystem (IP Multimedia Subsystem, IMS) voice call service.

The PCF network element is mainly responsible for policy control functions such as charging for a session level or a service flow level, QoS bandwidth guarantee, mobility management, and UE policy decision.

The NRF network element may be configured to provide a network element discovery function, and provide, based on a request from another network element, network element information corresponding to a network element type. The NRF further provides a network element management service, for example, registration, update, and deregistration of a network element and a subscription and push of a network element status.

The AUSF network element is mainly responsible for authenticating a user, to determine whether the user or a device is allowed to access a network.

The DN is a network outside the carrier network. The carrier network may access a plurality of DNs, and a plurality of services may be deployed in the DNs, to provide services such as a data service and/or a voice service for a terminal device. For example, the DN is a private network of a smart factory, a sensor installed in a workshop of the smart factory may be a terminal device, a control server of the sensor is deployed on the DN, and the control server may provide a service for the sensor. The sensor may communicate with the control server, to obtain instructions of the control server, transmit collected sensor data to the control server based on the instructions, and so on. For another example, the DN is an internal office network of a company, a mobile phone or a computer of an employee of the company may be a terminal device, and the mobile phone or the computer of the employee may access information, data resources, and the like on the internal office network of the company.

In FIG. 1, Nnwdaf, Nausf, Nnef, Npcf, Nudm, Naf, Namf, Nsmf, N1, N2, N3, N4, and N6 are interface sequence numbers. For meanings of these interface sequence numbers, refer to meanings defined in the 3GPP standard protocol. This is not limited herein.

It should be noted that, in this embodiment of this application, a data analytics network element may be the NWDAF network element shown in FIG. 1, or may be another network element that is in a future communication system and that has a function of the NWDAF network element. A network repository network element may be the NRF network element shown in FIG. 1, or may be another network element that is in a future communication system and that has a function of the NRF network element. For ease of description, in this embodiment of this application, an example in which the data analytics network element is the NWDAF network element and the network repository network element is the NRF network element is used for description. In addition, the NWDAF network element is further divided into a training NWDAF network element and an inference NWDAF network element.

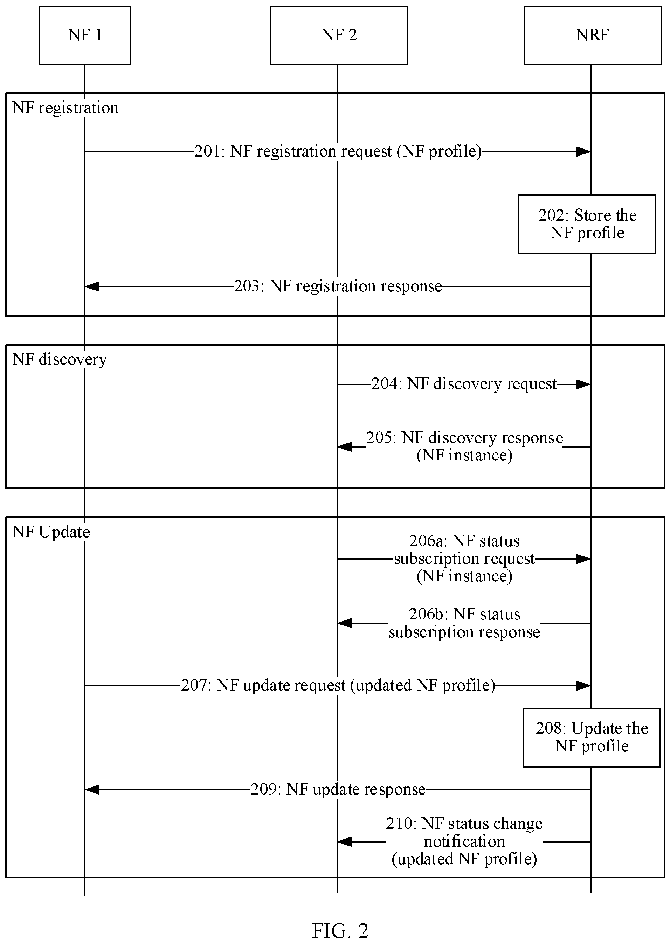

FIG. 2 is a schematic diagram of an NF registration/discovery/update procedure in a 5G network. An NRF in the 5G network is mainly configured to manage network functions (Network Functions, NFs). The network functions herein may be, for example, an SMF, an AMF, an NEF, an AUSF, an NWDAF and a PCF. The functions supported by the NRF are as follows:

(1) NF registration/update/deregistration: An available NF instance (NF instance) registers a service that can be provided by the NF instance with the NRF, registration information is described by using an NF profile (NF profile), and the NF profile includes information such as an NF type, an NF service name, and an NF address. The NRF maintains these NF profiles. When an NF needs to be updated or deleted, the NRF correspondingly modifies or deletes the NF profile.

(2) NF discovery: The NRF receives an NF discovery request from an NF instance, and provides discovered NF instance information for the requested NF instance. For example, the AMF requests the NRF to discover an SMF instance. For another example, an AMF requests the NRF to discover another AMF instance.

(3) NF status notification: The NRF notifies a subscribed NF service consumer of a newly registered, updated, or deregistered NF instance and an NF service provided by the NRF instance.

In FIG. 2, an NF registration process includes step 201 to step 203.

Step 201: An NF 1 sends, to the NRF, an NF registration request that carries an NF profile.

The NF profile includes information such as an NF type, an NF service name, and an NF address.

Step 202: The NRF stores the NF profile.

Step 203: The NRF sends an NF registration response to the NF 1.

The NF registration response notifies that NF registration succeeds.

An NF discovery process includes step 204 and step 205.

Step 204: An NF 2 sends, to the NRF, an NF discovery request message that carries NF condition information that needs to be searched for, for example, the NF type (NF type).

Step 205: The NRF sends, to the NF 2, an NF discovery response that carries NF instance information that meets a condition, for example, an NF identifier (NF ID) or an NF IP address.

An NF update process includes step 206a to step 210.

Step 206a: The NF 2 sends, to the NRF, an NF status subscription request that carries an NF instance requesting to subscribe to status information of the NF instance.

After the NF 2 subscribes to status information of an NF instance from the NRF (the following uses a subscription to status information of the NF 1 as an example), if the NRF subsequently finds that the status information of the NF instance changes, the NRF sends updated status information of the NF instance to the NF 2.

Step 206b: The NRF sends an NF status subscription response to the NF 2.

The NF status subscription response notifies that NF status subscription succeeds.

Step 207: The NF 1 sends, to the NRF, an NF update request that carries an updated NF profile.

Step 208: The NRF updates the NF profile.

In other words, the NRF updates the stored NF profile based on the received updated NF profile.

Step 209: The NRF sends an NF update response to the NF 1.

The NF update response indicates that the EP profile is successfully updated.

Step 210: The NRF sends, to the NF 2, an NF status change notification that carries the updated NF profile.

In other words, the NRF sends the NF status change notification to the NF 2 that has subscribed to the status information of the NF 1.

Based on the foregoing processes, NF registration, discovery, and update functions may be implemented with reference to the NRF.

It should be noted that the NF registration, NF discovery, and NF update processes are not necessarily continuous. Only a procedure example is provided herein to describe a common occurrence sequence.

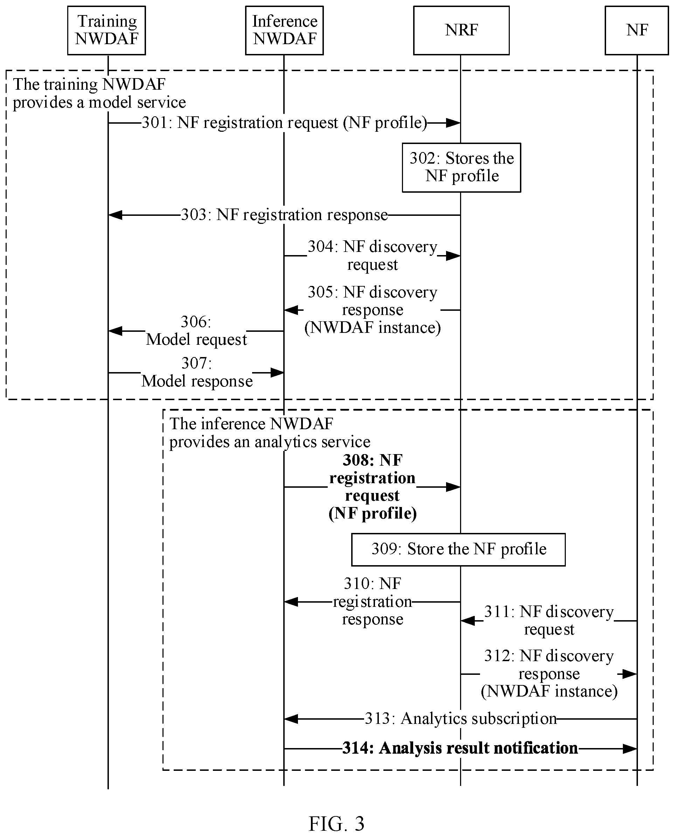

FIG. 3 is a schematic diagram of a working procedure of a training NWDAF and an inference NWDAF in a training-inference separation architecture. Functions of network elements are described as follows:

NRF: The NRF is responsible for NF management, and provided interface services include NF registration/deregistration/update, an NF status subscription/notification, and the like.

Training NWDAF: The training NWDAF is responsible for model training, and a trained model can be used by another NWDAF (for example, an inference NWDAF).

Inference NWDAF: The inference NWDAF is responsible for model inference, performs data analysis based on an inference result, and outputs a data analysis result.

NF: The NF is responsible for a specific service function, and can invoke a service of the inference NWDAF to obtain a data analysis result.

The procedure shown in FIG. 3 includes the following steps.

Step 301: The training NWDAF sends, to the NRF, an NF registration request that carries an NF profile.

The NF profile includes information such as an NF type, an NF service name (NF Service), and an analytics type identifier (Analytics ID).

The NF type may be an NWDAF.

The NF service name may be a model provision service (ModelProvision).

The analytics type identifier indicates a specific analytics type provided by the training NWDAF, which, for example, may be service experience, network performance, or UE mobility.

Step 302: The NRF stores the NF profile.

Step 303: The NRF sends an NF registration response to the training NWDAF.

The NF registration response notifies the training NWDAF that registration succeeds.

Step 304: The inference NWDAF sends, to the NRF, an NF discovery request that carries an NF profile.

For example, if the carried NF profile includes an NF type (for example, an NWDAF), an NF service name (for example, ModelProvision), and a carried analytics ID, the NF discovery request requests to obtain a training NWDAF corresponding to the analytics ID from the NRF.

Step 305: The NRF sends, to the inference NWDAF, an NF discovery response that carries an NWDAF instance.

The carried NWDAF instance is an instance of the training NWDAF, and an identifier of the NWDAF instance may be represented by using an ID or an IP address of the training NWDAF.

Step 301 to step 305 are optional. For example, if NF configuration information of the training NWDAF is configured on the inference NWDAF, step 301 to step 305 may not be performed.

Step 306: The inference NWDAF sends, to the training NWDAF, a model request that carries the analytics ID.

The inference NWDAF may send the model request to the training NWDAF based on the ID or the IP address of the training NWDAF obtained from the NRF, and the carried analytics ID indicates to request to obtain a model corresponding to the analytics ID.

Step 307: The training NWDAF sends, to the inference NWDAF, a model response that carries model information.

The model (also referred to as a machine learning model, Machine Learning Model, ML Model) information is used to describe a method for determining sample output data based on sample input data. The model information may include but is not limited to one or more of the following information: a feature type corresponding to the input data, a feature extraction method of the feature type corresponding to the input data (a function relationship), a type corresponding to the output data (a category label, a continuous value, or the like), an algorithm type used by a model, a category of the model (classification, regression, clustering, or the like), and parameters of the model. A cat-dog classification model is used as an example. The model may determine, based on input data of a shape sample of an unknown animal, whether the sample is a cat or a dog. A feature type of the input data may be animal weight, hair length, or voice, a method for extracting animal weight of the feature type corresponding to the input data may be maximum-minimum normalization, a type corresponding to output data is the cat or the dog, an algorithm type used by the model may be a deep neural network (deep neural network, DNN), a category of the model is a classification, and parameters of the model include but are not limited to: a quantity of neural network layers, an activation function used at each layer, or one or more function parameter values corresponding to the activation function at each layer. It should be noted that, for all model information (for example, first model information and second model information) and information about the model (for example, first information of the model and second information of the model) in the present invention, refer to the descriptions of the model information. Details are not described again elsewhere.

Step 301 to step 307 are a procedure in which the training NWDAF provides the model service. Based on this procedure, the training NWDAF registers the NF profile with the NRF, and the inference NWDAF may subsequently obtain the training NWDAF instance from the NRF, so that the inference NWDAF may request the training NWDAF to obtain model information of a specific type. That is, the training NWDAF may provide the model service for the inference NWDAF.

Step 308: The inference NWDAF sends, to the NRF, an NF registration request that carries an NF profile.

The NF profile includes information such as an NF type, an NF service name (NF Service), and an analytics type identifier (Analytics ID).

The NF type may be an NWDAF.

The NF service name may be an analytics (Analytics) provision service.

The analytics type identifier indicates a specific analytics type provided by the training NWDAF, which, for example, may be service experience, network performance, or UE mobility.

Step 309: The NRF stores the NF profile.

Step 310: The NRF sends an NF registration response to the inference NWDAF.

The NF registration response notifies the inference NWDAF that registration succeeds.

Step 311: The NF sends, to an NRF, an NF discovery request that carries an NF profile.

The NF is an NF consumer (NF consumer), for example, may be an SMF, an AMF, or a UPF.

For example, if the carried NF profile includes an NF type (for example, an NWDAF), an NF service name (for example, ModelProvision), and a carried analytics ID, the NF discovery request requests to obtain an inference NWDAF corresponding to the analytics ID from the NRF.

Step 312: The NRF sends, to the NF, an NF discovery response that carries an NWDAF instance.

The carried NWDAF instance is an instance of the inference NWDAF, and an identifier of the NWDAF instance may be represented by using an ID or an IP address of the inference NWDAF.

It should be noted that step 308 to step 312 are optional. For example, if NF configuration information of the inference NWDAF is configured on the NF, step 308 to step 312 may not be performed.

Step 313: The NF sends, to the inference NWDAF, an analytics subscription that carries the analytics ID.

The NF may send the analytics subscription to the inference NWDAF based on the ID or the IP address of the inference NWDAF obtained from the NRF, and the carried analytics ID indicates to subscribe to to obtain a data analysis result corresponding to the analytics ID.

Step 314: The inference NWDAF sends, to the NF, an analysis result notification that carries a data analysis result.

Step 308 to step 314 are a procedure in which the inference NWDAF provides the analytics service. Based on this procedure, the inference NWDAF registers the NF profile with the NRF, and the NF may subsequently obtain the inference NWDAF instance from the NRF, so that the NF may request the inference NWDAF to obtain a data analysis result of a specific type. That is, the inference NWDAF may provide a data analytics service for the NF.

In an alternative implementation, step 313 and step 314 may be replaced with the following step 313' and step 314'.

Step 313': The NF sends, to the inference NWDAF, an analytics request that carries the analytics ID.

The NF may send the analytics request to the inference NWDAF based on the ID or the IP address of the inference NWDAF obtained from the NRF, and the carried analytics ID indicates to request to obtain a data analysis result corresponding to the analytics ID.

Step 314': The inference NWDAF sends, to the NF, an analysis result response that carries a data analysis result.

In step 313' and step 314', only when the analytics request needs to be actively sent each time, the inference NWDAF sends the data analysis result to the NF. However, in step 313 and step 314, this subscription needs to be performed only once, and the inference NWDAF subsequently and actively sends the data analysis result to the NF when the new data analysis result is generated.

Aproblem existing in the model training and model use processes shown in FIG. 3 is as follows: As time moves, the inference NWDAF may locally determine an inference result based on inference data, and then determine a model use effect (namely, a model performance evaluation result) based on a real result of the inference data and the inference result, and the inference NWDAF determines, based on the use effect, that performance of the machine learning model deteriorates. However, in a training-inference separation scenario, the training NWDAF cannot perceive the model use effect in the inference NWDAF, and the inference NWDAF is incapable of performing model training. Therefore, in a conventional technology, retraining and model update cannot be performed when the model performance deteriorates, in other words, it cannot be ensured that model performance is always good in a running process. If the inference NWDAF continues to use the model whose performance deteriorates to perform data analysis, an inaccurate data analysis result may be caused. This affects the model performance.

To resolve the foregoing problem, embodiments of this application provide to establish a model performance monitoring and feedback mechanism, to evaluate performance of a model running in the inference NWDAF. When the performance of the model deteriorates to a specific extent, the training NWDAF may perform perception and perform retraining in time, and the inference NWDAF may use a new model with good performance obtained through retraining to perform model update (or replacement), to ensure a model use effect. The monitoring, feedback, retraining, and update mechanisms may be implemented by using the NRF, or may be implemented by directly interacting the training NWDAF with the inference NWDAF.

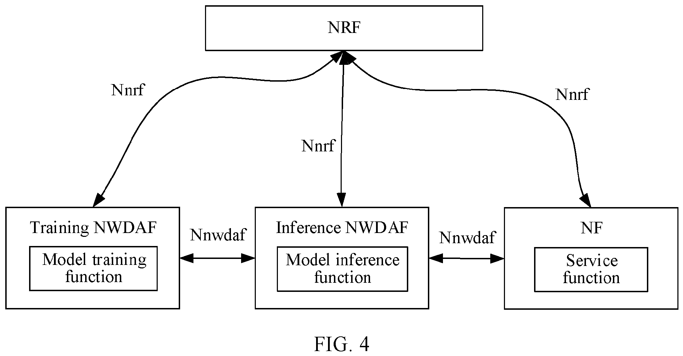

A system architecture to which this embodiment of this application is applied is an eNA architecture. Specifically, this embodiment of this application is specific to a scenario in which the model training function and the inference function are separately deployed, in other words, the training function and the inference function are deployed in different NWDAF instances. FIG. 4 is a schematic diagram of a network architecture to which an embodiment of this application is applicable. The training NWDAF, the inference NWDAF, and the NF all need to register with the NRF by using an Nnrf interface service. The inference NWDAF requests a model from the training NWDAF by using an Nnwdaf interface service, and the NF requests a data analysis result from the inference NWDAF by using the Nnwdaf interface service.

The following describes the solutions provided in embodiments of this application.

## Embodiment 1

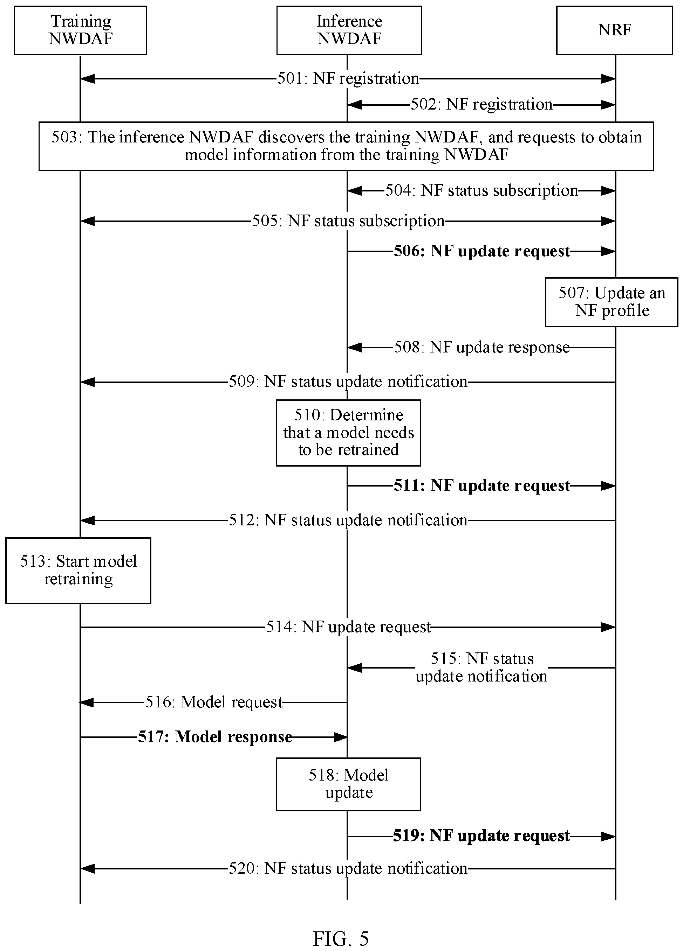

FIG. 5 is a schematic flowchart of a method for ensuring model validity in a training-inference separation scenario according to an embodiment of this application.

In Embodiment 1, it is considered that registration information is updated at an NRF, to implement performance monitoring and model update. The following content is mainly included.

1. Model performance monitoring and feedback: Model status information is added to registration information of an inference NWDAF at the NRF, and the inference NWDAF performs model performance monitoring. When determining that a model needs to be retrained, the inference NWDAF updates the model status information at the NRF. The NRF notifies a training NWDAF of the model status update, to trigger the training NWDAF to retrain the model. 2. Model update: Model index information is added to registration information of the training NWDAF at the NRF. After a new model is obtained through retraining by the training NWDAF, the model index information is updated at the NRF. The NRF notifies the inference NWDAF that a new model is available, and the inference NWDAF actively requests the new model from the training NWDAF and completes model update.

This embodiment includes the following steps.

Step 501: The training NWDAF registers with the NRF.

The training NWDAF sends, to the NRF, an NF registration request that carries an NF profile. The NF profile includes information such as an NF type, an NF service name (for example, an NF service), and an analytics type identifier (for example, an analytics ID), and further includes model index information. The model index information may be a model version number (for example, a version), location information (for example, a location), a uniform resource locator (Uniform Resource Locator, URL), or the like. The version represents a model version, the location or the URL represents a storage location of a model, and any one of the three may be used. Optionally, when the model index information is the location information or the URL, the location information or the URL may alternatively include the model version. Optionally, the location information may be an IP address.

Correspondingly, the NRF stores the NF profile and sends an NF registration response to the training NWDAF.

Step 502: The inference NWDAF registers with the NRF.

The inference NWDAF sends, to the NRF, an NF registration request that carries an NF profile. The NF profile includes information such as an NF type, an NF service name (for example, an NF service), and an analytics type identifier (for example, an analytics ID), and further includes model status information. The model status information indicates a model use status.

Optional values of the model status information include but are not limited to:

(1) Null 'null': indicates that no model is available.
(2) OK 'ok': indicates that model performance is good, and an analytics service can be provided externally.
(3) Limited 'limited': indicates that the model performance deteriorates, but the service can still be provided, and retraining is required.
(4) Stopped 'stopped': indicates that the model is closed, and has stopped providing the service.

In a registration process, if the model status information carried in the NF registration request is 'null', no model is currently available on the inference NWDAF.

Correspondingly, the NRF stores the NF profile and sends an NF registration response to the inference NWDAF.

Step 503: The inference NWDAF discovers the training NWDAF, and requests to obtain model information from the training NWDAF.

For this process, refer to step 304 to step 307 in the embodiment in FIG. 3. Details are not described again. Based on this process, the inference NWDAF may obtain the model information from the training NWDAF.

Step 504: The inference NWDAF subscribes to a status of the training NWDAF from the NRF.

When the NF profile registered by the training NWDAF at the NRF is subsequently updated, the NRF notifies the inference NWDAF.

Step 505: The training NWDAF subscribes to a status of the inference NWDAF from the NRF.

When the NF profile registered by the inference NWDAF at the NRF is subsequently updated, the NRF notifies the training NWDAF.

There is no fixed sequence between step 504 and step 505.

Step 506: The inference NWDAF sends, to the NRF, an NF update request that carries an updated NF profile.

The updated NF profile carries at least updated model status information, and the updated model status information may be, for example, 'ok'. Optionally, the updated NF profile further carries the analytics ID for identifying a model to be updated. Optionally, the updated NF profile further carries the NF type, the NF service name (NF Service), and the like.

Step 507: The NRF updates the NF profile.

In other words, the NRF updates the stored NF profile based on the received updated NF profile.

Step 508: The NRF sends an NF update response to the inference NWDAF.

The NF update response notifies that the NF profile of the inference NWDAF is successfully updated.

Step 509: The NRF sends, to the training NWDAF, an NF status update notification that carries the updated model status information.

The updated model status information may be, for example, 'ok'.

Optionally, the NF status update notification further carries indication information, indicating that an update type is model status information update.

In step 505, the training NWDAF subscribes to the status of the inference NWDAF from the NRF. Therefore, after the NF profile of the inference NWDAF stored in the NRF is updated, the NRF notifies the training NWDAF.

Step 510: The inference NWDAF determines that the model needs to be retrained.

A determining basis may be that a performance evaluation result of the model does not meet a model performance requirement (for example, model precision decreases to less than 80%, where 80% is a model precision requirement), or a service key performance indicator (Key Performance Indicator, KPI) reported by the NF does not meet a KPI requirement (for example, the KPI decreases to below the KPI requirement). For a method for determining whether a model needs to be retrained or needs to be updated in other embodiments of the present invention, refer to descriptions herein. Details are not described again.

It should be noted that step 510 is performed in a running process of the model in the inference NWDAF, and is not performed at a fixed time point.

Step 511: The inference NWDAF sends, to the NRF, an NF update request that carries an updated NF profile.

The updated NF profile carries at least updated model status information, and the updated model status information may be, for example, 'limited'. Optionally, the updated NF profile further carries the analytics ID for identifying a model to be updated. Optionally, the updated NF profile further carries the NF type, the NF service name (NF Service), and the like.

The NRF updates the stored NF profile, and then sends an NF update response to the inference NWDAF.

Step 512: The NRF sends, to the training NWDAF, an NF status update notification that carries the updated model status information.

The updated model status information may be 'limited'.

Optionally, the NF status update notification further carries indication information, indicating that an update type is model status information update.

In step 505, the training NWDAF subscribes to the status of the inference NWDAF from the NRF. Therefore, after the NF profile of the inference NWDAF stored in the NRF is updated, the NRF notifies the training NWDAF.

Step 513: The training NWDAF starts model retraining.

The training NWDAF starts model retraining, to obtain a trained model and corresponding model index information, such as a model version number, location information, or a URL.

Step 514: The training NWDAF sends, to the NRF, an NF update request that carries an updated NF profile.

The updated NF profile carries at least updated model index information, and the updated model index information may be, for example, updated model version information, updated model location information, or an updated model URL. Optionally, the updated NF profile further carries the analytics ID for identifying a model to be updated. Optionally, the updated NF profile further carries the NF type, the NF service name (NF Service), and the like.

The NRF updates the stored NF profile, and then sends an NF update response to the training NWDAF.

Step 515: The NRF sends, to the inference NWDAF, an NF status update notification that carries the updated model index information.

The updated model index information may be, for example, the updated model version information, the updated model location information, or the updated model URL.

Optionally, the NF status update notification further carries indication information, indicating that an update type is model index information update.

In step 504, the inference NWDAF subscribes to the status of the training NWDAF from the NRF. Therefore, after the NF profile of the training NWDAF stored in the NRF is updated, the NRF notifies the inference NWDAF.

Step 516: The inference NWDAF sends, to the training NWDAF, a model request that carries the analytics ID and the updated model index information.

The analytics ID indicates a model corresponding to the analytics ID.

Step 517: The training NWDAF sends, to the inference NWDAF, a model response that carries model information.

The model information includes model information corresponding to the updated model index information, namely, model information corresponding to the obtained new model.

Optionally, the model information carried in the model response may be a parameter value of the new model, the new model (for example, a model file or an image file including the model), or an address (for example, a URL or an IP address) of the new model.

The model file is a model persistence file stored by using a third-party framework, for example, a model file in .pb format stored by using an artificial intelligence framework TensorFlow. The model image file is an image software package including a model, and may include a model file and a plurality of other files related to model use.

It should be noted that, if the model index information carried in step 516 is the address of the new model, the inference NWDAF may directly further obtain new model information based on the address information, and step 516 and step 517 do not need to be performed. For example, the inference NWDAF obtains, based on the URL and according to a file transfer protocol (File Transfer Protocol, FTP), a file including the new model information (for example, a file including the parameter value of the new model, a new model file, or an image file including the new model).

If the model index information carried in step 516 is a model version number, the model information carried in the model response may be the parameter value of the new model, or the new model (the model file or the image including the model), or may be the address (for example, the URL or the IP address) of the new model. If the model information carried in the model response is the address (for example, the URL or the IP address) of the new model, the inference NWDAF may further obtain the new model information based on the address information.

Step 518: The inference NWDAF performs model update.

In other words, the inference NWDAF updates or replaces, based on the received new model information, an old model that is being used.

Optionally, the inference NWDAF performs a local test on the new model information before updating the model. After the test is passed, the inference NWDAF updates or replaces the model.

Step 519: The inference NWDAF sends, to the NRF, an NF update request that carries an updated NF profile.

The updated NF profile carries at least updated model status information, and the updated model status information may be, for example, 'ok'. Optionally, the updated NF profile further carries the analytics ID for identifying a model to be updated. Optionally, the updated NF profile further carries the NF type, the NF service name (NF Service), and the like.

The NRF updates the stored NF profile, and then sends an NF update response to the inference NWDAF.

Step 520: The NRF sends, to the training NWDAF, an NF status update notification that carries the updated model status information.

The updated model status information may be 'ok'.

Optionally, the NF status update notification further carries indication information, indicating that an update type is model status information update.

Step 511 to step 520 are optional. For example, if the inference NWDAF determines that the model does not need to be retrained in step 510, or the inference NWDAF can tolerate that the model performance deteriorates to below the model performance requirement, step 511 to step 520 may not be performed.

In step 505, the training NWDAF subscribes to the status of the inference NWDAF from the NRF. Therefore, after the NF profile of the inference NWDAF stored in the NRF is updated, the NRF notifies the training NWDAF.

Based on the foregoing embodiment, when the performance of the model used in the inference NWDAF deteriorates, the training NWDAF may be notified via the NRF to perform model retraining. After the training ends, the inference NWDAF may update or replace the old model with the new model. This ensures a use effect of the model.

In addition, when there are a plurality of inference NWDAFs, if performance of only one inference NWDAF X deteriorates, and the training NWDAF is notified to perform retraining, after the training ends, in addition to the inference NWDAF X, any other inference NWDAF in the plurality of inference NWDAFs may also obtain the new model according to the foregoing mechanism by updating or replacing the old model with the new model. In this way, a use effect of the model on the plurality of inference NWDAFs can be ensured. For a scenario in which the plurality of inference NWDAFs exist, for an example of a detailed process, refer to Embodiment 2.

**Embodiment 2**

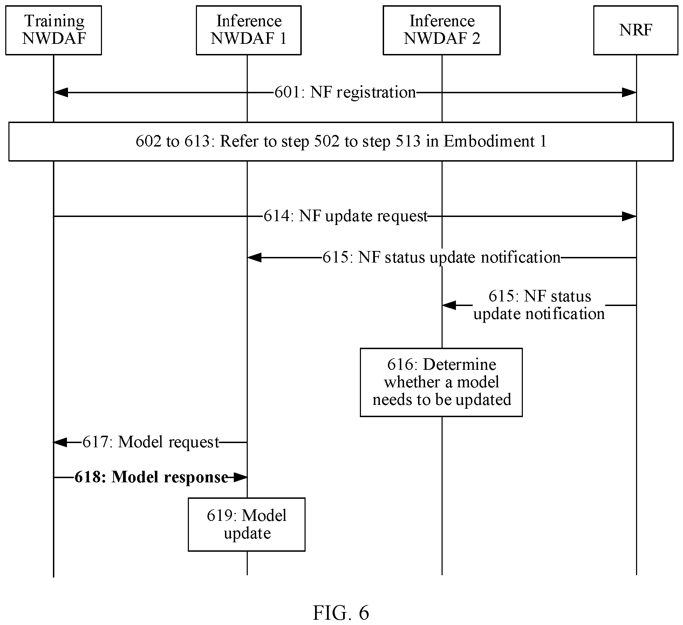

FIG. 6 is a schematic flowchart of a method for ensuring model validity in another training-inference separation scenario according to an embodiment of this application.

In Embodiment 2, based on Embodiment 1, a scenario in which a plurality of inference NWDAFs exist is considered. The following uses an example in which two inference NWDAFs (which are respectively represented by an inference NWDAF 1 and an inference NWDAF 2) exist. The inference NWDAF 1 and the inference NWDAF 2 use a same model to perform data analysis, and the model is from a same training NWDAF. At a moment, if performance of the model in the NWDAF 1 deteriorates and the model needs to be retrained, the model in the inference NWDAF 2 does not need to be retrained. Herein, only the inference NWDAF 2 is used as an example to indicate that in addition to the inference NWDAF 1 that requests retraining, another inference NWDAF that uses the same model may further exist.

The inference NWDAF 2 also subscribes to a status of the training NWDAF. Therefore, after the training NWDAF performs retaining to obtain a new model, the inference NWDAF 2 also receives a notification from an NRF. If the new model has a better effect than the model in the inference NWDAF 2, the inference NWDAF 2 may further improve a data analysis effect by using the new model. In addition, because the model in the inference NWDAF 2 is not necessarily updated in this case, the inference NWDAF 2 needs to first obtain the new model and then determine whether the model in the inference NWDAF 2 needs to be updated after performing local evaluation. After the new model is obtained, if the inference NWDAF 2 finally determines not to perform update, some transmission resources are wasted. In this embodiment, it is considered that model performance information, including precision, a required calculation amount, and the like, is further added to registration information of the training NWDAF, to help another inference NWDAF that temporarily does not require update determine whether the new model needs to be requested.

This embodiment includes the following steps.

Step 601: The training NWDAF registers with the NRF.

The training NWDAF sends, to the NRF, an NF registration request that carries an NF profile. The NF profile includes information such as an NF type, an NF service name (NF Service), and an analytics type identifier (Analytics ID), and further includes model index information and model performance information. The model index information may be a model version number (version), location information (location), a URL, or the like. The version represents a model version, the location or the URL represents a storage location of a model, and any one of the three may be used. Optionally, when the model index information is the location or the URL, the location or the URL may also include the version. The model performance information indicates performance of the model, for example, may include model accuracy, hardware capability information required for achieving the accuracy, a calculation amount required for model inference, model inference duration, and a size of the model.

Optionally, the NF profile may further include information such as an algorithm used by the model, an artificial intelligence framework, and an input feature of the model.

Correspondingly, the NRF stores the NF profile and sends an NF registration response to the training NWDAF.

Step 602 to step 613 are similar to step 502 to step 513 in Embodiment 1.

It should be noted that, for a related operation of the inference NWDAF 1 and a related operation of the inference NWDAF 2 in step 602 to step 613, refer to related operations of the inference NWDAF in step 502 to step 513. In addition, in step 610 and step 611 (refer to step 510 and step 611), the inference NWDAF 1 determines that the model needs to be retrained, and then sends an NF update request to the NRF, to trigger the training NWDAF to start model retraining.

Step 614: The training NWDAF sends, to the NRF, an NF update request that carries an updated NF profile.

The updated NF profile carries at least updated model index information and updated model performance information, and the updated model index information may be, for example, updated model version information, updated model location information, or an updated model URL. Optionally, the updated NF profile further carries the analytics ID for identifying a model to be updated. The updated model performance information, for example, may include model accuracy, hardware capability information required for achieving the accuracy, a calculation amount required for model inference, model inference duration, and a size of the model.

Optionally, the updated NF profile further carries the NF type, the NF service name (NF Service), and the like.

The NRF updates the stored NF profile, and then sends an NF update response to the training NWDAF.

Step 615: The NRF separately sends, to the inference NWDAF 1 and the inference NWDAF 2, an NF status update notification that carries the updated model index information and the updated model performance information.

The updated model index information may be, for example, the updated model version information, the updated model location information, or the updated model URL.

The updated model performance information, for example, may include model accuracy, hardware capability information required for achieving the accuracy, a calculation amount required for model inference, model inference duration, and a size of the model.

Optionally, the NF status update notification further carries indication information, indicating that an update type is model index information update and model performance information update.

In the foregoing step, the inference NWDAF 1 and the inference NWDAF 2 separately subscribe to the status of the training NWDAF from the NRF. Therefore, after the NF profile of the training NWDAF stored in the NRF is updated, the NRF notifies the inference NWDAF 1 and the inference NWDAF 2.

Step 616: The inference NWDAF 2 determines whether a model needs to be updated.

Because the inference NWDAF 2 does not trigger model training, after receiving the updated model index information, the inference NWDAF 2 needs to determine whether the model needs to be updated.

Optionally, the inference NWDAF 2 may determine, based on a calculation capability of the inference NWDAF 2, a model performance requirement, and the received updated model performance information, whether the model needs to be updated. Alternatively, the inference NWDAF 2 may determine, based on a performance status of the model that is being used and the received updated model performance information, whether the model needs to be updated.

Step 617: The inference NWDAF 1 sends, to the training NWDAF, a model request that carries an analytics ID and the updated model index information.

The analytics ID indicates a model corresponding to the analytics ID.

Because the inference NWDAF 1 triggers the model training, after receiving the updated model index information, the inference NWDAF 1 needs to update the model.

Step 618: The training NWDAF sends, to the inference NWDAF 1, a model response that carries model information.

The model information includes model information corresponding to an updated model identifier, namely, model information corresponding to an obtained new model.

For a specific implementation of the model information, refer to the descriptions in the foregoing embodiment.

Step 619: The inference NWDAF 1 performs model update.

In other words, the inference NWDAF updates or replaces, based on the received new model information, an old model that is being used.

Optionally, the inference NWDAF performs a local test on the new model information before updating the model. After the test is passed, the inference NWDAF updates or replaces the model.

It should be noted that, if determining that the model needs to be updated in step 616, the inference NWDAF 2 further needs to perform an operation process similar to that in step 617 to step 619, to request to obtain the updated model information from the training NWDAF, and then updates, based on the received new model information, the old model that is being used. If determining that the model does not need to be updated in step 616, the inference NWDAF 2 does not need to perform the model update procedure.

Based on the foregoing embodiment, the inference NWDAF that subscribes to the same model may determine, based on the model performance information, whether the new model needs to be requested, to avoid unnecessary model transmission and an unnecessary local evaluation process. This can improve efficiency of the model update procedure and save resources.

**Embodiment 3**

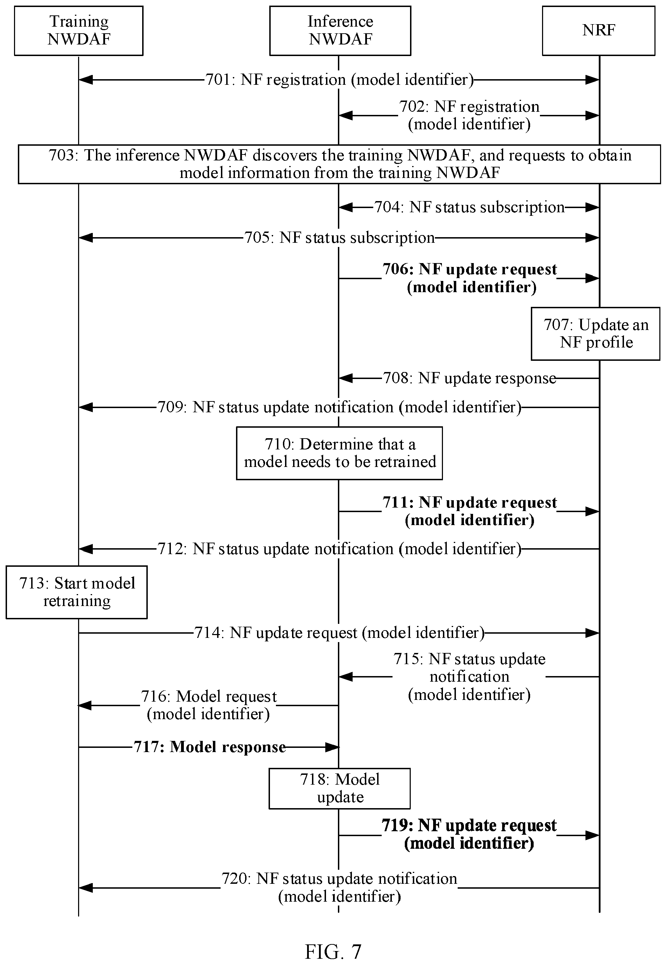

FIG. 7 is a schematic flowchart of a method for ensuring model validity in another training-inference separation scenario according to an embodiment of this application.

Based on Embodiment 1, for a same analytics ID, a scenario in which a plurality of submodels need to work together to complete analysis is considered in Embodiment 3. In this scenario, performance deterioration of any submodel causes performance deterioration of a model corresponding to the analytics ID. If model monitoring is performed based only on the analytics ID, a submodel whose performance deteriorates cannot be precisely located, and all the submodels corresponding to the analytics ID are retrained and updated. However, actually, some submodels may not need to be updated due to good performance. This causes unnecessary training and update.

In this embodiment, it is considered that a model identifier (model ID) is further added to represent each submodel.

This embodiment includes the following steps.

Step 701: A training NWDAF registers with an NRF.

The training NWDAF sends, to the NRF, an NF registration request that carries an NF profile. The NF profile includes information such as an NF type, an NF service name (NF Service), and an analytics type identifier (Analytics ID), and further includes a model identifier (model ID) and model index information. The model index information may be a model version number (version), location information (location), a URL, or the like. The version represents a model version, the location or the URL represents a storage location of a model, and any one of the three may be used. Optionally, when the model index information is the location or the URL, the location or the URL may also include the version. The model identifier uniquely identifies a model. For example, the model identifier may include an NWDAF address, a PLMN ID, and a unique model ID within an NWDAF range.

It should be noted that the NF profile may carry a plurality of pieces of model index information, and each model identifier corresponds to one piece of model index information.

Correspondingly, the NRF stores the NF profile and sends an NF registration response to the training NWDAF.

Optionally, the updated NF profile may further carry a plurality of model identifiers, and each model identifier identifies one of a plurality of updated models.

Step 702: An inference NWDAF registers with the NRF.

The inference NWDAF sends, to the NRF, an NF registration request that carries an NF profile. The NF profile includes information such as an NF type, an NF service name (NF Service), and an analytics type identifier (Analytics ID), and further includes model status information and a model identifier. Each model identifier corresponds to one piece of model status information.

The model status information indicates a use status of a model corresponding to the model identifier. Optional values of the model status information include but are not limited to:

    (1) 'null': indicates that no model is available.
    (2) 'ok': indicates that model performance is good, and an analytics service can be provided externally.
    (3) 'limited': indicates that the model performance deteriorates, but the service can still be provided, and retraining is required.
    (4) 'stopped': indicates that the model is closed, and has stopped providing the service.

In a registration process, if the model status information carried in the NF registration request is 'null', no model is currently available on the inference NWDAF.

For example, the model status information and the model identifier that are carried in the NF profile are as follows: {(model ID 1, null), (model ID 2, null), and (model ID 3, null)}.

Alternatively, the model status information and the model identifier that are carried in the NF profile are as follows: {(model ID 1, model ID 2, model ID 3), and (null, null, null)}.

Optionally, during actual application, the model status information and the model identifier that are carried in the NF profile may be a list. The list includes a plurality of pieces of item information, and each piece of item information includes one piece of model status information and one model identifier.

Correspondingly, the NRF stores the NF profile and sends an NF registration response to the inference NWDAF.

Step 703: The inference NWDAF discovers the training NWDAF, and requests to obtain model information from the training NWDAF.

For this process, refer to step 503 in the embodiment in FIG. 5. Details are not described again. Based on this process, the inference NWDAF may obtain the model information from the training NWDAF.

Step 704: The inference NWDAF subscribes to a status of the training NWDAF from the NRF.

When the NF profile registered by the training NWDAF at the NRF is subsequently updated, the NRF notifies the inference NWDAF.

Step 705: The training NWDAF subscribes to a status of the inference NWDAF from the NRF.

When the NF profile registered by the inference NWDAF at the NRF is subsequently updated, the NRF notifies the training NWDAF.

There is no fixed sequence between step 704 and step 705.

Step 706: The inference NWDAF sends, to the NRF, an NF update request that carries an updated NF profile.

The updated NF profile carries at least updated model status information, and the updated model status information may be, for example, 'ok'. Each model identifier corresponds to one piece of updated model status information.

Optionally, the updated NF profile further carries the analytics ID for identifying a model to be updated. Optionally, the updated NF profile further carries the NF type, the NF service name (NF Service), and the like.

Optionally, the updated NF profile may further carry a model identifier for identifying an updated model.

Step 707: The NRF updates the stored NF profile.

Step 708: The NRF sends an NF update response to the inference NWDAF.

The NF update response notifies that the NF profile is successfully updated.

Step 709: The NRF sends, to the training NWDAF, an NF status update notification that carries the updated model status information.

Each model identifier corresponds to one piece of updated model status information. The updated model status information may be, for example, 'ok'.

Optionally, the NF status update notification further carries indication information, indicating that an update type is model status information update.

Optionally, the NF status update notification may further carry a model identifier for identifying an updated model.

In step 705, the training NWDAF subscribes to the status of the inference NWDAF from the NRF. Therefore, after the NF profile of the inference NWDAF stored in the NRF is updated, the NRF notifies the training NWDAF.

Step 710: The inference NWDAF determines that the model needs to be retrained.

A determining basis may be a performance evaluation result of the model (for example, a model precision decrease) or a service KPI reported by the NF (for example, a KPI decrease).

It should be noted that step 710 is performed in a running process of the model in the inference NWDAF, and is not performed at a fixed time point.

It should be noted that in this step, a determining result may be that one or more submodels need to be retrained. For example, a model corresponding to an analytics ID includes a total of 10 submodels, represented by a model ID 1 to a model ID 10. For example, the determining result in step 710 is that the submodels corresponding to the model ID 1 to the model ID 3 need to be retrained, and the submodels corresponding to the model ID 4 to the model ID 10 do not need to be retrained.

Step 711: The inference NWDAF sends, to the NRF, an NF update request that carries an updated NF profile.

The updated NF profile carries at least updated model status information, and each model identifier corresponds to one piece of updated model status information. The updated model status information may be 'limited'. Optionally, the updated NF profile further carries the analytics ID for identifying a model to be updated. Optionally, the updated NF profile further carries the NF type, the NF service name (NF Service), and the like.

Optionally, the updated NF profile may further carry a model identifier, for identifying an updated model.

The NRF updates the stored NF profile, and then sends an NF update response to the inference NWDAF.

It should be noted that the model identifier carried in the updated NF profile in step 711 is identifier information of the submodel that needs to be retrained and that is determined in step 710, and the updated model status information is updated model status information corresponding to the identifier information of the submodel that needs to be retrained.

Step 712: The NRF sends, to the training NWDAF, an NF status update notification that carries the updated model status information.

Each model identifier corresponds to one piece of updated model status information. The updated model status information may be 'limited'.

Optionally, the NF status update notification further carries indication information, indicating that an update type is model status information update.

Optionally, the NF status update notification may further carry a model identifier for identifying an updated model.

In step 705, the training NWDAF subscribes to the status of the inference NWDAF from the NRF. Therefore, after the NF profile of the inference NWDAF stored in the NRF is updated, the NRF notifies the training NWDAF.

Step 713: The training NWDAF starts model retraining.

The training NWDAF starts model retraining, to obtain a trained model and corresponding model index information, such as a model version number, location information, or a URL.

It should be noted that in this step, retraining of only the submodels corresponding to the received IDs is started. For example, if the received model identifiers are the model ID 1 to the model ID 3, the submodels corresponding to the model ID 1 to the model ID 3 are retrained.

Step 714: The training NWDAF sends, to the NRF, an NF update request that carries an updated NF profile.

The updated NF profile carries at least updated model index information, and each model identifier corresponds to one piece of updated model status information. The updated model index information may be, for example, the updated model version information, the updated model location information, or the updated model URL. Optionally, the updated NF profile further carries the analytics ID for identifying a model to be updated. Optionally, the updated NF profile further carries the NF type, the NF service name (NF Service), and the like.

Optionally, the updated NF profile may further carry a model identifier for identifying an updated model.

The NRF updates the stored NF profile, and then sends an NF update response to the training NWDAF.

Step 715: The NRF sends, to the inference NWDAF, an NF status update notification that carries the updated model index information.

The updated model index information may be, for example, the updated model version information, the updated model location information, or the updated model URL.

Optionally, the NF status update notification further carries indication information, indicating that an update type is model index information update.

Optionally, the NF status update notification further carries a model identifier for identifying an updated model.

In step 704, the inference NWDAF subscribes to the status of the training NWDAF from the NRF. Therefore, after the NF profile of the training NWDAF stored in the NRF is updated, the NRF notifies the inference NWDAF.

Step 716: The inference NWDAF sends, to the training NWDAF, a model request that carries the analytics ID and the updated model index information.

The analytics ID indicates a model corresponding to the analytics ID.

The model identifier indicates submodels in the model corresponding to the analytics ID.

Step 717: The training NWDAF sends, to the inference NWDAF, a model response that carries model information.

The model information includes model information corresponding to an updated model identifier, namely, model information corresponding to an obtained new model.

For a specific implementation of the model information, refer to the descriptions in the foregoing embodiment.

Step 718: The inference NWDAF performs model update.

In other words, the inference NWDAF updates, based on the received new model information, the old model that is being used (specifically, corresponding submodels that need to be updated).

Optionally, the inference NWDAF performs a local test on the new model information before updating the model. After the test is passed, the inference NWDAF updates or replaces the model.

Step 719: The inference NWDAF sends, to the NRF, an NF update request that carries an updated NF profile.

The updated NF profile carries at least updated model status information, and each model identifier corresponds to one piece of updated model status information. The updated model status information may be, for example, 'ok'. Optionally, the updated NF profile further carries the analytics ID for identifying a model to be updated. Optionally, the updated NF profile further carries the NF type, the NF service name (NF Service), and the like.

The NRF updates the stored NF profile, and then sends an NF update response to the inference NWDAF.

Optionally, the updated NF profile may further carry a model identifier for identifying an updated model.

Step 720: The NRF sends, to the training NWDAF, an NF status update notification that carries the updated model status information.

Each model identifier corresponds to one piece of updated model status information. The updated model status information may be 'ok'.

Optionally, the NF status update notification further carries indication information, indicating that an update type is model status information update.

Optionally, the NF status update notification may further carry a model identifier for identifying an updated model.

Step 714 to step 720 are optional. For example, if the training NWDAF determines that the model does not need to be retrained in step 713, or the training NWDAF can tolerate that the model performance deteriorates to below a model performance requirement, or the training NWDAF currently does not have a model retraining capability (for example, hardware resources are limited), step 714 to step 720 may not be performed.

In step 705, the training NWDAF subscribes to the status of the inference NWDAF from the NRF. Therefore, after the NF profile of the inference NWDAF stored in the NRF is updated, the NRF notifies the training NWDAF.

Based on the foregoing embodiment, the model identifier (also referred to as a submodel identifier) is added, and performance monitoring is performed based on a submodel granularity. In the scenario in which one analytics ID corresponds to the plurality of submodels, model retraining and update can be precisely implemented, to avoid a waste of training and transmission resources.

## Embodiment 4

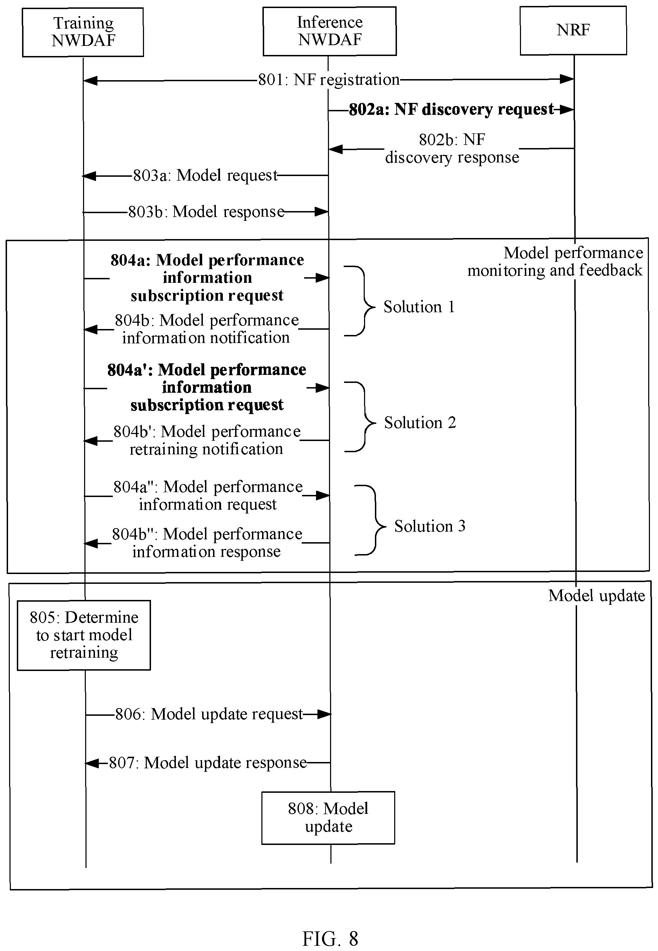

FIG. 8 is a schematic flowchart of a method for ensuring model validity in another training-inference separation scenario according to an embodiment of this application.

In Embodiment 1 to Embodiment 3, it is considered that information exchange between the training NWDAF and the inference NWDAF is implemented by using the NRF. In Embodiment 4, it is considered that a new operation is added on an interface between a training NWDAF and an inference NWDAF, to directly perform information exchange.

This embodiment includes the following steps.

Step 801: The training NWDAF registers with an NRF.

The training NWDAF sends, to the NRF, an NF registration request that carries an NF profile. The NF profile includes information such as an NF type, an NF service name (NF Service), and an analytics type identifier (Analytics ID).

Correspondingly, the NRF stores the NF profile and sends an NF registration response to the training NWDAF.

Step 802a: The inference NWDAF sends, to the NRF, an NF discovery request that carries an NF profile.

For example, if the carried NF profile includes an NF type (for example, an NWDAF), an NF service name (for example, ModelProvision), and an analytics ID, the NF discovery request requests to obtain a training NWDAF corresponding to the analytics ID from the NRF.

Step 802b: The NRF sends, to the inference NWDAF, an NF discovery response that carries an NWDAF instance.

The carried NWDAF instance is an instance of the training NWDAF, and an identifier of the NWDAF instance may be represented by using an ID or an IP address of the training NWDAF.

Step 803a: The inference NWDAF sends, to the training NWDAF, a model request that carries the analytics ID.

The inference NWDAF may send the model request to the training NWDAF based on the ID or the IP address of the training NWDAF obtained from the NRF, and the carried analytics ID indicates to request to obtain a model corresponding to the analytics ID.

Step 803b: The training NWDAF sends, to the inference NWDAF, a model response that carries model information.

For a specific implementation of the model information, refer to the descriptions in the foregoing embodiment.

For example, step 801 to step 803b are optional. For example, if the NF profile of the training NWDAF is configured on the inference NWDAF, step 801 to step 803b may not be performed.

Step 804a: The training NWDAF sends, to the inference NWDAF, a model performance information subscription request that carries the analytics ID, a model performance indicator (for example, precision (Precision), accuracy (Accuracy), error rate (Error Rate), recall rate (Recall), F1 score (F-Score), mean squared error (Mean Squared Error, MSE), root mean squared error (Root Mean Squared Error, RMSE), root mean squared logarithmic error (Root Mean Squared Logarithmic Error, RMSLE), mean absolute error (Mean Absolute Error, MAE), model inference duration, model robustness, model expandability, or model interpretability), and a reporting periodicity.

The precision, the accuracy, the error rate, the recall rate, and the F1 score indicate performance of a model of a classification type or an annotation type. The mean squared error, the root mean squared error, the root mean squared logarithmic error, and the mean absolute error indicate performance of a model of a regression type. The model inference duration indicates a time period required for model prediction. The model robustness indicates a capability of a model to process a missing value and an abnormal value. The model expandability indicates a capability of processing big datasets. The model interpretability indicates comprehensibility of a model prediction standard. For example, a decision tree model has high model interpretability due to a generated rule or a tree structure, and a neural network model has low model interpretability due to a large quantity of model parameters.

Step 804b: The inference NWDAF sends, to the training NWDAF, a model performance information notification that carries the analytics ID, the model performance indicator, and a value corresponding to the model performance indicator.

The inference NWDAF periodically sends the model performance information notification to the training NWDAF based on the reporting periodicity.

Based on step 804a and step 804b, the inference NWDAF may periodically report the model performance information to the training NWDAF.

Optionally, the model performance information notification may further carry a model performance requirement of the inference NWDAF for the model, data used by the inference NWDAF to perform model evaluation, and/or the like. The model performance requirement may assist the training NWDAF in determining whether retraining needs to be performed and determining whether performance of the model obtained through retraining meets the requirement of the inference NWDAF, and the data used by the inference NWDAF to perform model evaluation includes input data of the model, output data (an inference result) of the model, and an actual network measurement value (network data) corresponding to the inference result, and may be used when the training NWDAF performs model retraining.

Optionally, step 804a and step 804b may alternatively be replaced with the following step 804a' and step 804b'.

Step 804a': The training NWDAF sends, to the inference NWDAF, a model performance information subscription request that carries the analytics ID, a model performance indicator (for example, precision, accuracy, error rate, recall rate, F1 score, mean squared error, root mean squared error, root mean squared logarithmic error, mean absolute error, model inference duration, model robustness, model expandability, or model interpretability), and a performance threshold.

Step 804b': The inference NWDAF sends, to the training NWDAF, a model performance retraining notification that carries the analytics ID.

Based on step 804a' and step 804b', if determining that a value corresponding to the model performance indicator reaches the performance threshold, the inference NWDAF reports a model performance information notification to the training NWDAF. The model performance retraining notification is used to trigger the training NWDAF to perform model retraining. Optionally, the performance threshold may not be carried in step 804b'. In this case, the inference NWDAF may autonomously determine the performance threshold. The model performance retraining notification in step 804b' may also be referred to as a model performance threshold reaching notification or a model performance information notification.

Optionally, the model performance information notification may further carry a model performance requirement of the inference NWDAF for the model, data used by the inference NWDAF to perform model evaluation, and/or the like. The model performance requirement may be the threshold autonomously determined by the inference NWDAF, and is used to assist the training NWDAF in determining whether retraining needs to be performed and determining whether performance of the model obtained through retraining meets the requirement of the inference NWDAF, and the data used by the inference NWDAF to perform model evaluation includes input data of the model, output data (an inference result) of the model, and an actual network measurement value (network data) corresponding to the inference result, and may be used when the training NWDAF performs model retraining.

Optionally, step 804a and step 804b may alternatively be replaced with the following step 804a" and step 804b".

Step 804a": The training NWDAF sends, to the inference NWDAF, a model performance information request that carries the analytics ID and a model performance indicator (for example, precision, accuracy, error rate, recall rate, F1 score, mean squared error, root mean squared error, root mean squared logarithmic error, mean absolute error, model inference duration, model robustness, model expandability, or model interpretability).

Step 804b": The inference NWDAF sends, to the training NWDAF, a model performance information response that carries the analytics ID, the model performance indicator, and a value corresponding to the model performance indicator.

Based on step 804a" and step 804b", the training NWDAF may periodically send the model performance information request to the inference NWDAF. Each time the inference NWDAF receives the model performance information request, the inference NWDAF performs model performance evaluation based on the model performance indicator, and sends the model performance information response to the training NWDAF.

Optionally, the model performance information response may further carry a model performance requirement of the inference NWDAF for the model, data used by the inference NWDAF to perform model evaluation, and/or the like. The model performance requirement may assist the training NWDAF in determining whether retraining needs to be performed and determining whether performance of the model obtained through retraining meets the requirement of the inference NWDAF, and the data used by the inference NWDAF to perform model evaluation includes input data of the model, output data (an inference result) of the model, and an actual network measurement value (network data) corresponding to the inference result, and may be used when the training NWDAF performs model retraining.

Optionally, step 804a and step 804b may alternatively be replaced with the following step 804a''' and step 804b'''.

Step 804a''': The training NWDAF sends, to the inference NWDAF, a model performance data subscription request that carries the analytics ID and a reporting periodicity.

Step 804b''': The inference NWDAF sends, to the training NWDAF, a model performance data notification that carries the analytics ID and model performance evaluation reference information.

The model performance evaluation reference information includes at least one of input data of the model, output data (an inference result) of the model, or an actual network measurement value corresponding to the inference result.

Based on step 804a'" and step 804b'", the inference NWDAF periodically sends the model performance data notification to the training NWDAF based on the reporting periodicity. In other words, the inference NWDAF may periodically report the model performance evaluation reference information to the training NWDAF.

The actual network measurement value (network data) corresponding to the inference result may be collected by the inference NWDAF from a live network and then reported to the training NWDAF, or may be autonomously collected by the training NWDAF from the live network.

Optionally, the model performance data notification may further carry a model performance requirement of the inference NWDAF for the model.

The training NWDAF may construct a test set based on the model performance evaluation reference information periodically reported by the inference NWDAF, and perform model performance evaluation.

Optionally, step 804a and step 804b may alternatively be replaced with the following step 804a"" and step 804b"".

Step 804a"": The training NWDAF sends, to the inference NWDAF, a model performance data request that carries the analytics ID.

Optionally, the model performance data request further includes a time range, indicating to request performance data within the time range.

Step 804b"": The inference NWDAF sends, to the training NWDAF, a model performance data response that carries the analytics ID and model performance evaluation reference information.

The model performance evaluation reference information includes at least one of input data of the model, output data (an inference result) of the model, or an actual network measurement value (network data) corresponding to the inference result.

Based on step 804a"" and step 804b"", the training NWDAF may send the model performance data request to the inference NWDAF, and the inference NWDAF sends the model performance data response to the training NWDAF. In other words, the inference NWDAF sends the model performance evaluation reference information to the training NWDAF, and the model performance evaluation reference information may be within the specified time range.

The actual network measurement value corresponding to the inference result may be collected by the inference NWDAF from a live network and then reported to the training NWDAF, or may be autonomously collected by the training NWDAF from the live network.

Optionally, the model performance data response may further carry a model performance requirement of the inference NWDAF for the model.

The training NWDAF may construct a test set based on the model performance evaluation reference information sent by the inference NWDAF, and perform model performance evaluation.

Step 805: The training NWDAF determines to start model retraining.

For example, if step 804a and step 804b are performed, when determining that the value corresponding to the model performance indicator reaches the performance threshold preset by the training NWDAF or does not meet the model performance requirement of the inference NWDAF, the training NWDAF determines to start model retraining.

For another example, if step 804a' and step 804b' are performed, the training NWDAF receives the model performance information notification, and determines to start the model retraining.

For example, if step 804a" and step 804b" are performed, when determining that the value corresponding to the model performance indicator reaches the performance threshold preset by the training NWDAF or does not meet the model performance requirement of the inference NWDAF, the training NWDAF determines to start model retraining.

For another example, if step 804a'" and step 804b'" or step 804a"" and step 804b"" are performed, when determining, based on the model performance evaluation reference information, that the model performance reaches the performance threshold preset by the training NWDAF or does not meet the model performance requirement of the inference NWDAF, the training NWDAF determines to start model retraining.

Step 806: The training NWDAF sends, to the inference NWDAF, a model update request that carries an analytics ID and new model information.

Optionally, the new model information in the model update request may be a parameter value of a new model, a new model file, an image file including a new model, or an address of a new model (for example, a URL or an IP address).

It should be noted that, if the address of the new model is carried in step 806, the inference NWDAF may obtain, based on the address, a file including the new model information, where the file may be a file including the parameter value of the new model, the model file, or the image file including the new model.

Step 807: The inference NWDAF sends a model update response to the training NWDAF.

Step 808: The inference NWDAF performs model update.

In other words, the inference NWDAF updates or replaces, based on the received new model information, an old model that is being used.

Optionally, the inference NWDAF performs a local test on the new model information before updating the model.

After the test is passed, the inference NWDAF updates or replaces the model.

Step 806 to step 808 are optional. For example, if the training NWDAF determines that the model does not need to be retrained in step 805, or the training NWDAF can tolerate that the model performance deteriorates to below a model performance requirement, or the training NWDAF currently does not have a model retraining capability (for example, hardware resources are limited), step 806 to step 808 may not be performed.

Based on the foregoing embodiment, the training NWDAF sends the model performance subscription or the model performance request to the inference NWDAF, to monitor performance of the model in the inference NWDAF. When the performance deteriorates and meets a retraining condition, the training NWDAF performs retraining in time, and sends the new model to the inference NWDAF for update. This ensures the model performance of the model in the inference NWDAF.

**Embodiment 5**

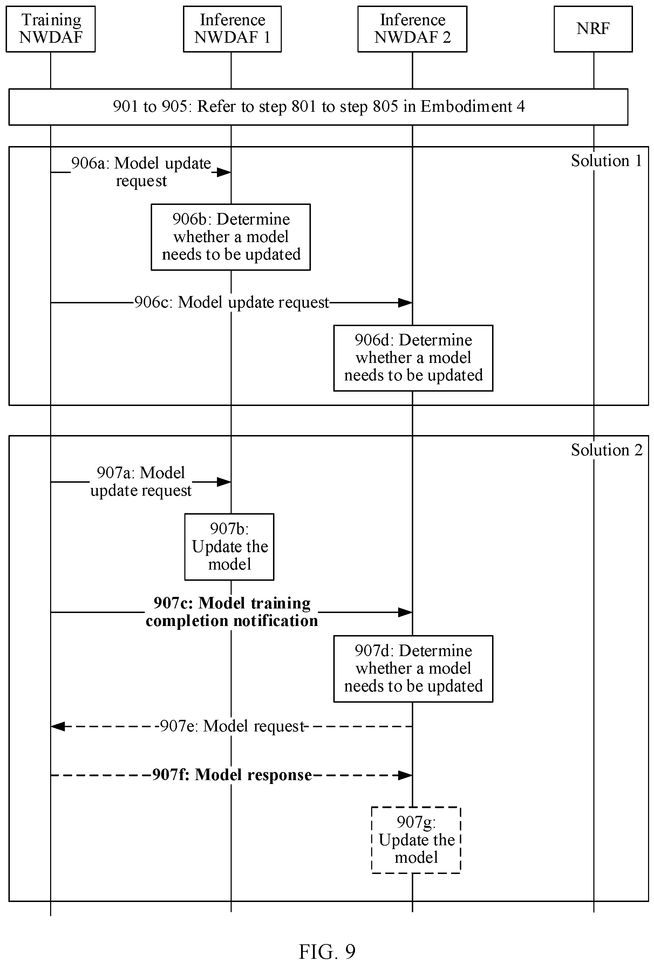

FIG. 9 is a schematic flowchart of a method for ensuring model validity in another training-inference separation scenario according to an embodiment of this application.

Based on Embodiment 4, a scenario in which a plurality of inference NWDAFs exist is considered in Embodiment 5. A specific scenario is the same as that in Embodiment 2. For details, refer to the descriptions of the scenario in Embodiment 2. Similar to Embodiment 2, it is considered in this embodiment that a parameter, including precision, a required calculation amount, or the like, indicating model performance information is added to a model update request, to help another inference NWDAF that temporarily does not require update determine whether a new model needs to be requested.

This embodiment includes the following steps.

Step 901 to step 905 are similar to step 801 to step 805 in Embodiment 4.

It should be noted that, for a related operation of the inference NWDAF 1 and a related operation of the inference NWDAF 2 in step 901 to step 905, refer to related operations of the inference NWDAF in step 802a to step 804b. In addition, in step 905, the training NWDAF triggers, based on the model performance information notification or the model performance information response sent by the inference NWDAF 1, to start model retraining.

Next, the training NWDAF needs to notify the inference NWDAF to perform model update.

Solution 1: The inference NWDAFs are not distinguished from each other. In other words, the training NWDAF always sends new model information obtained through training to all the inference NWDAFs. For this solution, refer to the following step 906a and step 906b.

Solution 2: Different inference NWDAFs are distinguished from each other, and new model information is sent only to an inference NWDAF that triggers the training NWDAF to perform model training. For this solution, refer to the following step 907a to step 907c.

It should be noted that one of Solution 1 and Solution 2 is selected to be executed.

Solution 1:

Step 906a: The training NWDAF sends, to the inference NWDAF 1, a model update request that carries an analytics ID, new model information, and model performance information.

Step 906b: The inference NWDAF 1 determines whether a model needs to be updated.

After receiving the model update request, the inference NWDAF 1 may determine, based on the model performance information and/or a local test result of the new model information, whether the model needs to be updated. If determining that the model needs to be updated, the inference NWDAF 1 replaces or updates an old model by using the new model information.

Step 906c: The training NWDAF sends, to the inference NWDAF 2, a model update request that carries an analytics ID, new model information, and model performance information.

Step 906d: The inference NWDAF 2 determines whether a model needs to be updated.

After receiving the model update request, the inference NWDAF 2 may determine, based on the model performance information and/or a local test result of the new model, whether the model needs to be updated. If determining that the model needs to be updated, the inference NWDAF 2 replaces or updates an old model by using the new model information.

Solution 2:

Step 907a: The training NWDAF sends, to the inference NWDAF 1, a model update request that carries an analytics ID and new model information.

Step 907b: The inference NWDAF 1 updates a model.

After receiving the model update request, the inference NWDAF 1 updates or replaces an old model by using the new model information.

Optionally, the inference NWDAF performs a local test on the new model information before updating the model. After the test is passed, the inference NWDAF updates or replaces the model.

Step 907c: The training NWDAF sends, to the inference NWDAF 2, a model training completion notification that carries the analytics ID and model performance information.

Step 907d: The inference NWDAF 2 determines whether a model needs to be updated.

For example, the inference NWDAF 2 may determine, based on a calculation capability of the inference NWDAF 2, a model performance requirement, and the received model performance information, whether the model needs to be updated.

When the inference NWDAF 2 determines that the model needs to be updated, the following step 907e and step 907g are performed; otherwise, the following step 907e and step 907g are not performed.

Step 907e: Optionally, the inference NWDAF 2 sends, to the training NWDAF, a model request that carries the analytics ID.

The analytics ID indicates a model corresponding to the analytics ID.

Step 907f: Optionally (depending on whether step 907e is performed), the training NWDAF sends, to the inference NWDAF 2, a model response that carries the new model information.

Step 907g: The inference NWDAF 2 updates the model.

In other words, the inference NWDAF 2 updates, based on the received new model information, the old model that is being used.

Optionally, the inference NWDAF 2 performs a local test on the new model information before updating the model. After the test is passed, the inference NWDAF updates or replaces the model.

Based on the foregoing embodiment, the inference NWDAF using the same model may obtain the new model information, and determine, based on the model performance information, whether the new model needs to be requested, to avoid unnecessary model transmission and local evaluation processes.

**Embodiment 6**

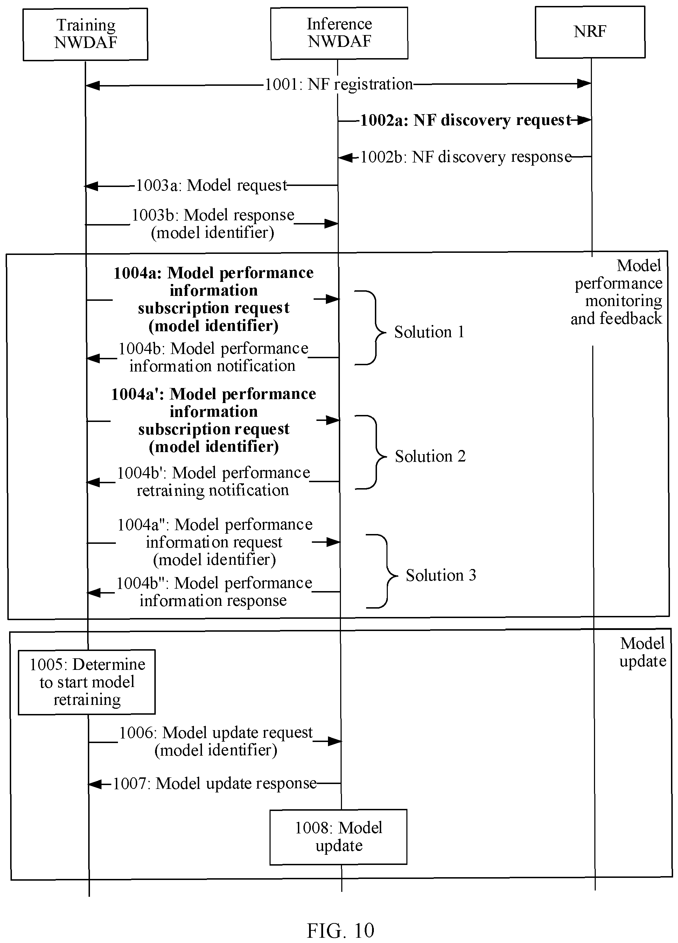

FIG. 10 is a schematic flowchart of a method for ensuring model validity in another training-inference separation scenario according to an embodiment of this application.

Based on Embodiment 4, for a same analytics ID, a scenario in which a plurality of submodels need to work together to complete analysis is considered in this embodiment. Similar to the solution in Embodiment 3, in this embodiment, it is considered that model IDs are further added to identify the submodels. A training NWDAF allocates different model IDs to the submodels, and precisely monitors performance of each submodel by using the model ID.

This embodiment includes the following steps.

Step 1001: The training NWDAF registers with an NRF.

The training NWDAF sends, to the NRF, an NF registration request that carries an NF profile. The NF profile includes information such as an NF type, an NF service name (NF Service), and an analytics type identifier (Analytics ID).

Correspondingly, the NRF stores the NF profile and sends an NF registration response to the training NWDAF.

Step 1002a: An inference NWDAF sends, to the NRF, an NF discovery request that carries an NF profile.

For example, if the carried NF profile includes an NF type (for example, an NWDAF), an NF service name (for example, ModelProvision), and a carried analytics ID, the NF discovery request requests to obtain a training NWDAF corresponding to the analytics ID from the NRF.

Step 1002b: The NRF sends, to the inference NWDAF, an NF discovery response that carries an NWDAF instance.

The carried NWDAF instance is an instance of the training NWDAF, and an identifier of the NWDAF instance may be represented by using an ID or an IP address of the training NWDAF.

Step 1003a: The inference NWDAF sends, to the training NWDAF, a model request that carries the analytics ID.

The inference NWDAF may send the model request to the training NWDAF based on the ID or the IP address of the training NWDAF obtained from the NRF, and the carried analytics ID indicates to request to obtain a model corresponding to the analytics ID.

Step 1003b: The training NWDAF sends, to the inference NWDAF, a model response that carries model information and a model identifier.

For a specific implementation of the model information, refer to the descriptions in the foregoing embodiment.

Each model identifier corresponds to one piece of model information.

Optionally, the model information and the model identifier may be implemented in a form of a model list. In other words, the model response carries the model list. The model list includes the model information, the model identifier, and a correspondence between the model information and the model identifier. For example, the model list includes:

<model information 1, model identifier 1>, <model information 2, model identifier 2>, and the like.

Step 1001 to step 1003b are optional. For example, if the NF profile of the training NWDAF is configured on the inference NWDAF, step 1001 to step 1003b may not be performed.

Step 1004a: The training NWDAF sends, to the inference NWDAF, a model performance information subscription request that carries the analytics ID, a model performance indicator (for example, precision, accuracy, error rate, recall rate, F1 score, mean squared error, root mean squared error, root mean squared logarithmic error, mean absolute error, model inference duration, model robustness, model expandability, or model interpretability), a reporting periodicity, and the model identifier.

It should be noted that, the model performance information subscription request may carry a plurality of model identifiers and a model performance indicator and a reporting periodicity that correspond to each model identifier. Especially, when each model identifier corresponds to a same reporting periodicity, only one reporting periodicity may be carried.

Step 1004b: The inference NWDAF sends, to the training NWDAF, a model performance information notification that carries the analytics ID, the model performance indicator, and a value corresponding to the model performance indicator.

The inference NWDAF periodically sends, based on the reporting periodicity, the model performance information notification corresponding to each submodel to the training NWDAF.

Based on step 1004a and step 1004b, the inference NWDAF may periodically report the model performance information corresponding to each submodel to the training NWDAF.

Optionally, the model performance information notification may further carry a model performance requirement of the inference NWDAF for each submodel, data used by the inference NWDAF to perform submodel evaluation, and/or the like. The model performance requirement may assist the training NWDAF in determining whether retraining needs to be performed and determining whether performance of the model obtained through retraining meets the requirement of the inference NWDAF, and the data used by the inference NWDAF to perform model evaluation includes input data of the model, output data (an inference result) of the model, and an actual network measurement value corresponding to the inference result, and may be used when the training NWDAF performs model retraining.

Optionally, step 1004a and step 1004b may alternatively be replaced with the following step 1004a' and step 1004b'.

Step 1004a': The training NWDAF sends, to the inference NWDAF, a model performance information subscription request that carries the analytics ID, a model performance indicator (for example, precision, accuracy, error rate, recall rate, F1 score, mean squared error, root mean squared error, root mean squared logarithmic error, mean absolute error, model inference duration, model robustness, model expandability, or model interpretability), a performance threshold, and the model identifier.

It should be noted that, the model performance information subscription request may carry a plurality of model identifiers and a model performance indicator and a performance threshold that correspond to each model identifier. Especially, when each model identifier corresponds to a same performance threshold, only one performance threshold may be carried.

Step 1004b': The inference NWDAF sends, to the training NWDAF, a model performance retraining notification that carries the analytics ID.

Based on step 1004a' and step 1004b', if determining that a value corresponding to the model performance indicator of the submodel reaches the performance threshold, the inference NWDAF reports a model performance information notification corresponding to the submodel to the training NWDAF. The model performance retraining notification is used to trigger the training NWDAF to perform submodel retraining. Optionally, the performance threshold may not be carried in step 1004b'. In this case, the inference NWDAF may autonomously determine the performance threshold. The model performance retraining notification in step 1004b' may also be referred to as a model performance threshold reaching notification or a model performance information notification.

Optionally, the model performance information notification may further carry a model performance requirement of the inference NWDAF for the submodel, data used by the inference NWDAF to perform model evaluation, and/or the like. The model performance requirement may be the threshold autonomously determined by the inference NWDAF, and is used to assist the training NWDAF in determining whether retraining needs to be performed and determining whether performance of the model obtained through retraining meets the requirement of the inference NWDAF, and the data used by the inference NWDAF to perform model evaluation includes input data of the model, output data (an inference result) of the model, and an actual network measurement value corresponding to the inference result, and may be used when the training NWDAF performs model retraining.

Optionally, step 1004a and step 1004b may alternatively be replaced with the following step 1004a" and step 1004b".

Step 1004a": The training NWDAF sends, to the inference NWDAF, a model performance information request that carries the analytics ID, a model performance indicator (for example, precision, accuracy, error rate, recall rate, F1 score, mean squared error, root mean squared error, root mean squared logarithmic error, mean absolute error, model inference duration, model robustness, model expandability, or model interpretability), and the model identifier.

It should be noted that, the model performance information request may carry a plurality of model identifiers and a model performance indicator corresponding to each model identifier.

Step 1004b": The inference NWDAF sends, to the training NWDAF, a model performance information response that carries the analytics ID, the model performance indicator, and a value corresponding to the model performance indicator.

Based on step 1004a" and step 1004b", the training NWDAF may periodically send the model performance information request to the inference NWDAF. Each time the inference NWDAF receives the model performance information request, the inference NWDAF performs model performance evaluation based on the model performance indicator, and sends the model performance information response corresponding to the submodel to the training NWDAF.

Optionally, the model performance information response may further carry a model performance requirement of the inference NWDAF for each submodel, data used by the inference NWDAF to perform model evaluation, and/or the like. The model performance requirement may assist the training NWDAF in determining whether retraining needs to be performed and determining whether performance of the model obtained through retraining meets the requirement of the inference NWDAF, and the data used by the inference NWDAF to perform model evaluation includes input data of the model, output data (an inference result) of the model, and an actual network measurement value (network data) corresponding to the inference result, and may be used when the training NWDAF performs model retraining.

Optionally, step 1004a and step 1004b may alternatively be replaced with the following step 1004a‴ and step 1004b‴.

Step 1004a‴: The training NWDAF sends, to the inference NWDAF, a model performance data subscription request that carries the analytics ID, a reporting periodicity, and the model identifier.

It should be noted that, the model performance data subscription request may carry a plurality of model identifiers and a reporting periodicity corresponding to each model identifier.

Step 1004b‴: The inference NWDAF sends, to the training NWDAF, a model performance data notification that carries the analytics ID and model performance evaluation reference information.

The model performance evaluation reference information includes at least one of input data of the model, output data (an inference result) of the model, or an actual network measurement value (network data) corresponding to the inference result.

It should be noted that, the model performance evaluation reference information herein may be a plurality of pieces of model performance evaluation reference information. Specifically, each model identifier corresponds to one piece of model performance evaluation reference information.

Based on step 1004a‴ and step 1004b‴, the inference NWDAF periodically sends the model performance data notification to the training NWDAF based on the reporting periodicity. In other words, the inference NWDAF may periodically report the model performance evaluation reference information respectively corresponding to each submodel to the training NWDAF.

The actual network measurement value (network data) corresponding to the inference result may be collected by the inference NWDAF from a live network and then reported to the training NWDAF, or may be autonomously collected by the training NWDAF from the live network.

Optionally, the model performance data notification may further carry a model performance requirement of the inference NWDAF for each submodel.

The training NWDAF may construct a test set based on the model performance evaluation reference information periodically reported by the inference NWDAF, and perform model performance evaluation.

Optionally, step 1004a and step 1004b may alternatively be replaced with the following step 1004a"" and step 1004b"".

Step 1004a"": The training NWDAF sends, to the inference NWDAF, a model performance data request that carries the analytics ID and the model identifier.

It should be noted that, the model performance data subscription request may carry a plurality of model identifiers.

Optionally, the model performance data request further includes a time range, indicating to request performance data within the time range. Specifically, each model identifier may correspond to one time range.

Step 1004b"": The inference NWDAF sends, to the training NWDAF, a model performance data response that carries the analytics ID and model performance evaluation reference information.

The model performance evaluation reference information includes at least one of input data of the model, output data (an inference result) of the model, or an actual network measurement value (network data) corresponding to the inference result.

It should be noted that, the model performance evaluation reference information herein may be a plurality of pieces of model performance evaluation reference information. Specifically, each model identifier corresponds to one piece of model performance evaluation reference information.

Based on step 1004a"" and step 1004b"", the training NWDAF may send the model performance data request to the inference NWDAF, and the inference NWDAF sends the model performance data response to the training NWDAF. In other words, the inference NWDAF sends the model performance evaluation reference information to the training NWDAF, and the model performance evaluation reference information may be within the specified time range.

The actual network measurement value (network data) corresponding to the inference result may be collected by the inference NWDAF from a live network and then reported to the training NWDAF, or may be autonomously collected by the training NWDAF from the live network.

Optionally, the model performance data response may further carry a model performance requirement of the inference NWDAF for the model.

The training NWDAF may construct a test set based on the model performance evaluation reference information sent by the inference NWDAF, and perform model performance evaluation.

Step 1005: The training NWDAF determines to start model retraining.

For example, if step 1004a and step 1004b are performed, when determining that the value corresponding to the model performance indicator reaches the performance threshold preset by the training NWDAF or does not meet the model performance requirement of the inference NWDAF, the training NWDAF determines to start model retraining.

For another example, if step 1004a' and step 1004b' are performed, the training NWDAF receives the model performance information notification, and determines to start the model retraining.

For example, if step 1004a" and step 1004b" are performed, when determining that the value corresponding to the model performance indicator reaches the performance threshold preset by the training NWDAF or does not meet the model performance requirement of the inference NWDAF, the training NWDAF determines to start model retraining.

For another example, if step 1004a''' and step 1004b''' or step 1004a"" and step 1004b'''' are performed, when determining, based on the model performance evaluation reference information, that the model performance reaches the performance threshold preset by the training NWDAF or does not meet the model performance requirement of the inference NWDAF, the training NWDAF determines to start model retraining.

Step 1006: The training NWDAF sends, to the inference NWDAF, a model update request that carries an analytics ID, new model information, and the model identifier.

It should be noted that, the model update request may carry a plurality of model identifiers and new model information corresponding to each model identifier.

Step 1007: The inference NWDAF sends a model update response to the training NWDAF.

Step 1008: The inference NWDAF performs model update.

In other words, the inference NWDAF updates or replaces, based on the received new model information, the old model (specifically, the old submodel) that is being used.

Optionally, the inference NWDAF performs a local test on the new model information before updating the model. After the test is passed, the inference NWDAF updates or replaces the model.

Step 1006 to step 1008 are optional. For example, if the training NWDAF determines that the model does not need to be retrained in step 805, or the training NWDAF can tolerate that the model performance deteriorates to below a model performance requirement, or the training NWDAF currently does not have a model retraining capability (for example, hardware resources are limited), step 1006 to step 1008 may not be performed.

Based on the foregoing embodiment, the submodel identifier is added, and performance monitoring is performed based on a model granularity. In the scenario in which one analytics ID corresponds to the plurality of submodels, model retraining and update can be precisely implemented, to avoid a waste of training and transmission resources.

**Embodiment 7**

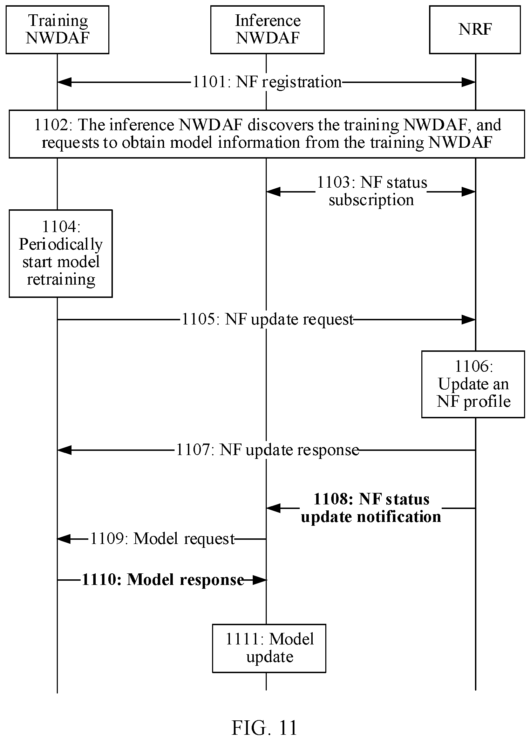

FIG. 11 is a schematic flowchart of a method for ensuring model validity in another training-inference separation scenario according to an embodiment of this application.

In this embodiment, it is considered that a training NWDAF periodically performs retraining, and notifies an inference NWDAF that there is an available new model. This embodiment is applicable to a scenario in which the inference NWDAF does not have an evaluation function. In other words, real-time feedback of the inference NWDAF about model performance cannot be obtained. To maintain the model performance, the training NWDAF may periodically perform retraining.

This embodiment includes the following steps.

Step 1101: The training NWDAF registers with an NRF.

The training NWDAF sends, to the NRF, an NF registration request that carries an NF profile. The NF profile includes information such as an NF type, an NF service name (NF Service), and an analytics type identifier (Analytics ID), and further includes model index information. The model index information may be a model version number (version), location information (location), a uniform resource locator (Uniform Resource Locator, URL), or the like. The version represents a model version, the location or the URL represents a storage location of a model, and any one of the three may be used. Optionally, when the model index information is the location or the URL, the location or the URL may also include the version.

Correspondingly, the NRF stores the NF profile and sends an NF registration response to the training NWDAF.

Step 1102: The inference NWDAF discovers the training NWDAF, and requests to obtain model information from the training NWDAF.

For this process, refer to step 304 to step 307 in the embodiment in FIG. 3. Details are not described again. Based on this process, the inference NWDAF may obtain the model information from the training NWDAF.

Step 1103: The inference NWDAF subscribes to a status of the training NWDAF from the NRF.

When the NF profile registered by the training NWDAF at the NRF is subsequently updated, the NRF notifies the inference NWDAF.

Step 1104: The training NWDAF periodically starts model retraining.

For example, a timer may be set for the training NWDAF, and retraining is performed once at a fixed interval.

Step 1105: The training NWDAF sends, to the NRF, an NF update request that carries an updated NF profile.

The updated NF profile carries at least updated model index information. Optionally, the updated NF profile further carries the NF type, the NF service name (NF Service), and the like.

Optionally, the updated NF profile may further carry updated model performance information, for example, model accuracy, hardware capability information required for achieving the accuracy, a calculation amount required for model inference, model inference duration, and a size of the model.

Step 1106: The NRF updates the stored NF profile.

Step 1107: The NRF sends an NF update response to the training NWDAF.

The NF update response notifies that the NF profile is successfully updated.

Step 1108: The NRF sends, to the inference NWDAF, an NF status update notification that carries the updated model index information.

Optionally, the NF status update notification further carries indication information, indicating that an update type is model index information update.

Step 1109: The inference NWDAF sends, to the training NWDAF, a model request that carries the analytics ID and the updated model index information.

The analytics ID indicates a model corresponding to the analytics ID.

Step 1110: The training NWDAF sends, to the inference NWDAF, a model response that carries model information.

The model information includes model information corresponding to the updated model index information, namely, model information corresponding to the obtained new model.

Step 1111: The inference NWDAF performs model update.

In other words, the inference NWDAF updates, based on the received new model information, the old model that is being used.

Optionally, the inference NWDAF performs a local test on the new model information before updating the model. After the test is passed, the inference NWDAF updates or replaces the model.

Step 1109 to step 1111 are optional. For example, if the inference NWDAF can tolerate that the model performance deteriorates to a model performance requirement after step 1108, step 1109 to step 1111 may not be performed.

It should be noted that step 1104 to step 1108 are performed periodically. Therefore, step 1109 to step 1111 are optional. Because the training NWDAF is only responsible for performing periodic retraining, the inference NWDAF autonomously determines whether to request the new model for update.

Based on this embodiment, in the scenario in which the inference NWDAF does not have the evaluation function, in other words, when the training NWDAF cannot obtain the real-time feedback of the inference NWDAF about the model performance, the training NWDAF may periodically perform retraining, to ensure the model performance.

It should be noted that based on Embodiment 7, when there are a plurality of inference NWDAFs, after step 1107, the NRF may send an NF status update notification to the plurality of inference NWDAFs, so that the plurality of inference NWDAFs can all send model requests to the training NWDAF, to update models in the plurality of inference NWDAFs.

It should be noted that based on Embodiment 7, when one analytics type identifier corresponds to a plurality of submodels, and each submodel is identified by using one model identifier, one or more model identifiers may be further carried in step 1105, the one or more model identifiers may be further carried in step 1108, and the one or more model identifiers may be further carried in step 1109, to update one or more submodels in the inference NWDAF.

**Embodiment 8**

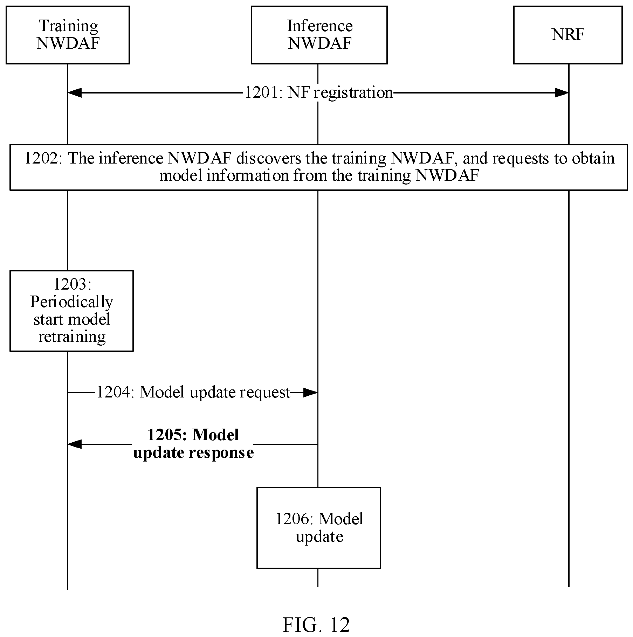

FIG. 12 is a schematic flowchart of a method for ensuring model validity in another training-inference separation scenario according to an embodiment of this application.

A scenario in Embodiment 8 is the same as that in Embodiment 7. To be specific, when an inference NWDAF does not have an evaluation function, a training NWDAF periodically performs retraining, and sends a model update message to the inference NWDAF.

This embodiment includes the following steps.

Step 1201: The training NWDAF registers with an NRF.

The training NWDAF sends, to the NRF, an NF registration request that carries an NF profile. The NF profile includes information such as an NF type, an NF service name (NF Service), and an analytics type identifier (Analytics ID).

Correspondingly, the NRF stores the NF profile and sends an NF registration response to the training NWDAF.

Step 1202: The inference NWDAF discovers the training NWDAF, and requests to obtain a model information from the training NWDAF.

For this process, refer to step 304 to step 307 in the embodiment in FIG. 3. Details are not described again. Based on this process, the inference NWDAF may obtain the model information from the training NWDAF.

Step 1203: The training NWDAF periodically starts model retraining.

For example, a timer may be set for the training NWDAF, and retraining is performed once at a fixed interval.

Step 1204: The training NWDAF sends, to the inference NWDAF, a model update request that carries an analytics ID and new model information.

Optionally, the model update request may further carry new model performance information, for example, model accuracy, hardware capability information required for achieving the accuracy, a calculation amount required for model inference, model inference duration, and a size of the model.

Step 1205: The inference NWDAF sends a model update response to the training NWDAF.

Step 1206: The inference NWDAF performs model update.

In other words, the inference NWDAF updates, based on the received new model information, the old model that is being used.

Optionally, the inference NWDAF performs a local test on the new model information before updating the model. After the test is passed, the inference NWDAF updates or replaces the model.

Step 1204 to step 1206 are optional. For example, if the training NWDAF determines in step 1203 that a model performance evaluation result of an updated model obtained through training is less than or equal to a performance evaluation result of the model provided by the training NWDAF for the inference NWDAF in step 1202, step 1204 to step 1206 may not be performed.

Based on the foregoing embodiment, in the scenario in which the inference NWDAF does not have the evaluation function, when the training NWDAF cannot obtain the real-time feedback of the inference NWDAF about the model performance, the training NWDAF may periodically perform retraining, to ensure the model performance.

It should be noted that, based on Embodiment 8, when there are a plurality of inference NWDAFs, in step 1204, the training NWDAF may send the model update requests to the plurality of inference NWDAFs, to update models in the plurality of inference NWDAFs.

It should be noted that, based on Embodiment 8, when one analytics type identifier corresponds to a plurality of submodels, and each submodel is identified by using one model identifier, one or more model identifiers may be further carried in step 1204, to update one or more submodels in the inference NWDAF.

**Embodiment 9**

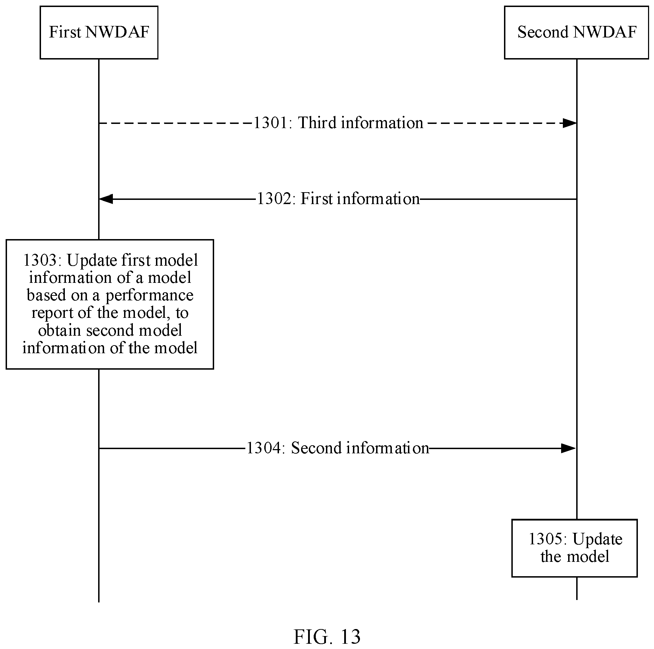

A relationship between Embodiment 9 and Embodiment 1 to Embodiment 8 is that Embodiment 1 to Embodiment 8 are different specific implementations of Embodiment 9. FIG. 13 is a schematic flowchart of a communication method according to an embodiment of this application. It should be noted that a first NWDAF in Embodiment 9 may be the training NWDAF in Embodiment 1 to Embodiment 8, a second NWDAF may be the inference NWDAF 1 in Embodiment 1 to Embodiment 8, and a third NWDAF may be the inference NWDAF 2 in Embodiment 1 to Embodiment 8.

The method includes the following steps.

Step 1301: The first NWDAF sends third information to the second NWDAF. Correspondingly, the second NWDAF receives the third information.

The third information includes a performance indicator of a model, where the performance indicator of the model is used to obtain a performance evaluation result of the model. Optionally, the performance indicator of the model includes one or more of the following: precision, accuracy, error rate, recall rate, F1 score, mean squared error, root mean squared error, root mean squared logarithmic error, mean absolute error, model inference duration, model robustness, model expandability, and model interpretability. In other words, the second NWDAF performs, based on the received performance indicator of the model, performance evaluation on the model that is being used, to obtain the performance evaluation result, and generates a performance report of the model.

Optionally, the third information further includes one or more of the following: an analytics type identifier, an identifier of the model, and an identifier of a submodel. The analytics type identifier (Analytics ID) indicates an analytics type of the model, which, for example, may be service experience, network performance, or UE mobility. The identifier of the model identifies the model. The identifier of the submodel identifies the submodel of the model. It should be noted that, when the model has no submodel, the third information may carry the identifier of the model, and does not need to carry the identifier of the submodel, or the third information carries neither the identifier of the model nor the identifier of the submodel. When the model has submodels, both the identifier of the model and identifiers of one or more submodels need to be carried. It should be noted that, when the third information carries the identifier of the submodel, the performance indicator of the model is used to obtain a performance evaluation result of the submodel of the model.

For a specific example of the submodel, refer to the descriptions in Embodiment 3 and Embodiment 6.

Optionally, the third information further includes one or both of the following: a reporting periodicity and threshold information. The reporting periodicity indicates a time point at which the performance report of the model is reported, in other words, indicates the second NWDAF to report the performance report of the model to the first NWDAF based on the reporting periodicity. The threshold information indicates a condition for reporting the performance report of the model. To be specific, when the evaluation result of the model obtained by the second NWDAF reaches a threshold corresponding to the threshold information, the second NWDAF reports the performance report of the model to the first NWDAF.

It should be noted that step 1301 is optional. When step 1301 is not performed, the third information may be preconfigured on the second NWDAF, or another network element configures the third information for the second NWDAF.

Step 1302: The second NWDAF sends first information to the first NWDAF. Correspondingly, the first NWDAF receives the first information.

The first information includes the performance report of the model, and the performance report of the model indicates the performance evaluation result of the model, or the performance report of the model indicates that the performance evaluation result of the model does not meet a requirement for the performance indicator of the model.

Optionally, the first information further includes one or more of the following information corresponding to the performance report of the model: time, an area, and a slice. The time refers to a time range in which the performance report of the model is generated, the area refers to an area range corresponding to the performance report of the model, and the slice refers to slice information corresponding to the performance report of the model.

Step 1303: The first NWDAF updates first model information of the model based on the performance report of the model, to obtain second model information of the model.

Step 1304: The first NWDAF sends second information to the second NWDAF. Correspondingly, the second NWDAF receives the second information.

The second information includes the second model information.

Optionally, the second information further includes one or more of the following: the identifier of the model, the identifier of the submodel, the performance evaluation result of the model, hardware capability information corresponding to the performance evaluation result of the model, a size of the model, and the model inference duration. The hardware capability information corresponding to the performance evaluation result of the model refers to a hardware capability requirement required for running the model, for example, a required graphics processing unit (Graphics Processing Unit, GPU) acceleration capability, and the model inference duration refers to a delay between receiving an input and generating an output by the model. Optionally, each type of hardware capability information corresponds to one inference duration. A stronger hardware capability indicates shorter inference duration.

Step 1305: The second NWDAF updates the model based on the second information.

For example, the second NWDAF replaces the first model information with the second model information based on the second information, to update the model.

Optionally, the first NWDAF may further send the second information to an NWDAF (for example, the third NWDAF) other than the second NWDAF. To be specific, the second NWDAF triggers the first NWDAF to update the model, to obtain the second model information. However, the first NWDAF not only sends the second information to the second NWDAF, but also sends the second information to the third NWDAF, so that the third NWDAF updates the model. This avoids a case in which the third NWDAF needs to separately request model update from the first NWDAF, to reduce signaling overheads.

For a specific example in which the first NWDAF sends the second information to the third NWDAF, refer to the descriptions in Embodiment 2 and Embodiment 5.

In an implementation, step 1301 may be specifically as follows: The first NWDAF sends the third information to the second NWDAF by using an NRF. Step 1302 may be specifically as follows: The first NWDAF receives the first information from the second NWDAF by using the NRF. Step 1304 may be specifically as follows: The first NWDAF sends the second information to the second NWDAF by using the NRF. That is, when there is no interface between the first NWDAF and the second NWDAF, the NRF may be used as an intermediate network element to implement interaction between the first NWDAF and the second NWDAF.

For a specific example in which the NRF is used as the intermediate network element, refer to the descriptions in Embodiment 1 to Embodiment 3.

Based on the foregoing solution, when the second NWDAF cannot complete model training, the second NWDAF element may send the performance report of the model to the first NWDAF, the first NWDAF may update the model based on the performance report of the model, to obtain the second model information of the model, and send the second model information to the second NWDAF, and the second NWDAF may update the model based on the second model information, so that the model can be trained in time when model performance deteriorates, to ensure the model performance.

For example, it is assumed that the model is a service experience model. The model may be used to evaluate service experience of a service flow based on network data corresponding to the service flow (for example, air interface quality of a terminal corresponding to the service flow on a base station side, or bandwidth, a delay, and jitter of a quality of service flow of a session of a terminal corresponding to the service flow on a user plane management network element). A network-side policy control function (Policy Charging Function, PCF) network element may determine, based on a service experience output result of the model, whether an experience requirement of the service flow is met, and if the experience requirement is not met, adjust a QoS parameter of the service. A prerequisite for the PCF to adjust the QoS parameter is that performance of the service experience model is good enough. Otherwise, service experience is affected. For example, service experience of a voice service, namely, an MOS (Mean Opinion Score, mean opinion score) is used as an example. An MOS requirement is 3.0. If an actual MOS of a service flow is 2.5, but an output MOS of a model is 3.5, the PCF does not adjust a QoS parameter of the service. As a result, the service experience is poor. If performance of the model is good enough, an output MOS of the model should be 2.5. In this case, the PCF adjusts the QoS parameter of the service, so that the MOS is greater than or equal to 3.0. For this example, the performance of the model affects the service experience. In addition, if the performance of the model continuously deteriorates and eventually deteriorates to a degree at which the model is completely unavailable, extremely poor service experience or service interruption is caused.

Federated learning, as a new artificial intelligence technology, can implement cross-domain joint model training when original data is not transmitted out of a local domain, to improve training efficiency. Most importantly, a federated learning technology may be used to avoid security problems (for example, the original data is hijacked during transmission or is incorrectly used by a data center) caused by data aggregation to a data analytics center. As a federated learning technology, horizontal federated learning is applicable to a data training scenario in which "a feature repetition rate is very high, but data samples differ from each other greatly".

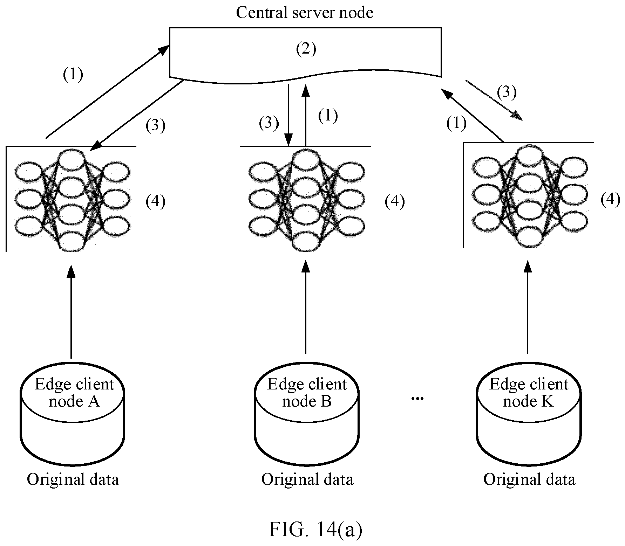

FIG. 14(a) shows a training process of horizontal federated learning (using linear regression as an example). It may be learned that horizontal federation learning includes a central server (server) node and a plurality of edge client (client) nodes (for example, a client node A, a client node B, and a client node K). Original data is distributed on each client node, the server node does not have the original data, and the client node is not allowed to send the original data to the server node.

First, a dataset on each client node (assuming that there are a total of $K$ client nodes, in other words, there are K datasets) is as follows:

$$\left\{x_i^A, y_i^A\right\}_i \in D_A, \left\{x_j^B, y_j^B\right\}_j \in D_B, ..., \left\{x_k^K, y_k^K\right\}_k \in D_K,$$

where
x is sample data, and $y$ is label data corresponding to the sample data. In horizontal federated learning, each piece of sample data includes a label, in other words, the label and the data are stored together.

Then, a data analytics module on each client node may train, based on a linear regression algorithm, a model of the client, which is referred to as a submodel:

$$h(x_i) = \Theta_A x_i^A, \quad h(x_j) = \Theta_B x_i^B, \quad ..., \quad h(x_K) = \Theta_K K x_k^K.$$

It is assumed that a loss function used by linear regression is a mean squared error (Mean Squared Error, MSE). In this case, a target function for training each submodel (where an entire training process is to minimize a loss function value) is:

$$\min L_I = \sum_i \left\| \Theta_I x_i^I - y_i^I \right\|^2 + \frac{\lambda}{2} \left\| \Theta_I \right\|^2, I = A, B, ..., K.$$

A training process really starts below. For each iteration process:

(1) A submodel gradient generated by each client node is as follows:

$$\frac{\partial L_I}{\partial \Theta_I} = \sum_i (\Theta_I x_i^I - y_i^I) x_i^I + \lambda \Theta_I, I = A, B, ..., K.$$

(2) Each client reports a quantity of samples and a local gradient value:

$N_I$ and $\dfrac{\partial L_I}{\partial \Theta_I}$, where $N_I$ represents the quantity of samples, and $\dfrac{\partial L_I}{\partial \Theta_I}$ represents the local gradient value.

(3) After receiving the foregoing information, the server node aggregates the gradient as follows:

$$\frac{1}{\|K\|} \sum_I \frac{\partial L_I}{\partial \Theta_I} * P_I,$$

where
$\|K\|$ is a quantity of client nodes, and $P_I = N_I / \Sigma_I N_I$.

(4) The server node delivers an aggregated gradient to each client node that participates in training, and then the client node locally updates a model parameter as follows:

$$\Theta_I := \Theta_I + \alpha \frac{1}{\|K\|} \sum_I \frac{\partial L_I}{\partial \Theta_I} * P_I, \quad I = A, B, ..., K.$$

(5) After updating the model parameter, the client node calculates the loss function value $L_I$ and returns to step (1).

In the foregoing training process, the server node may control, based on a quantity of iterations, the training to end, for example, terminate the training when the training is performed for 10000 times, or control, by setting a threshold of the loss function, the training to end, for example, control the training to end when $L_I \leq 0.0001$.

After the training ends, each client node retains a same model (which may be from the server node or may be obtained through local personalization based on the server node) for local inference.

In this embodiment of this application, horizontal federated learning may be combined with the NWDAF, to implement model training and update processes. The first NWDAF (also referred to as a server NWDAF) may train a model or aggregate a model, and the second NWDAF (also referred to as a client NWDAF) may train a model, update the model, and perform inference by using the model.

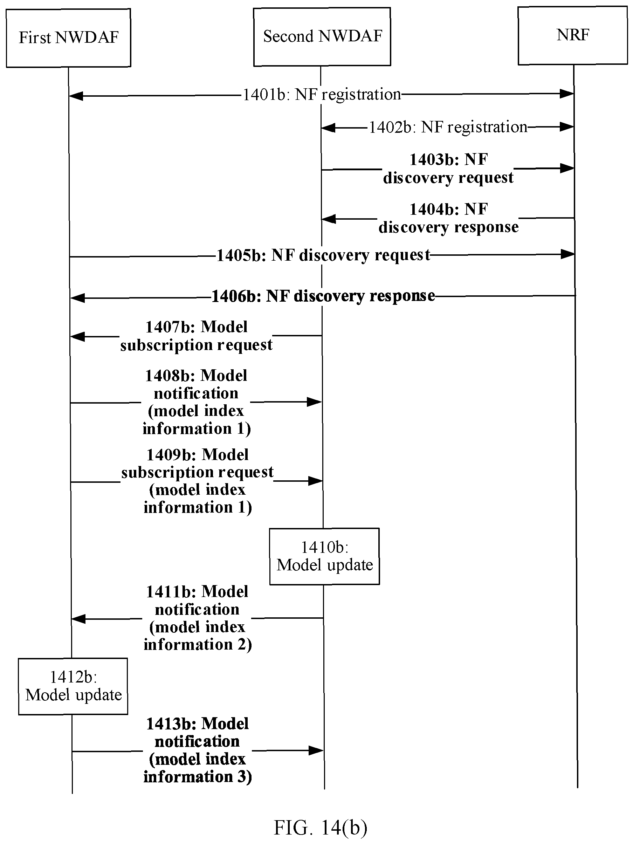

FIG. 14(b) is a schematic flowchart of another communication method according to an embodiment of this application. The method includes the following steps.

Step 1401b: The first NWDAF registers with an NRF.

The first NWDAF sends, to the NRF, an NF registration request that carries an NF profile. The NF profile includes information such as an NF type, an NF service name (NF Service, for example, ModelProvision), and an analytics type identifier (Analytics ID).

Correspondingly, the NRF stores the NF profile and sends an NF registration response to the first NWDAF.

Step 1402b: The second NWDAF registers with the NRF.

The second NWDAF sends, to the NRF, an NF registration request that carries an NF profile. The NF profile includes information such as an NF type, an NF service name (NF Service, for example, ModelUpdate), and an analytics type identifier (Analytics ID).

Correspondingly, the NRF stores the NF profile and sends an NF registration response to the second NWDAF.

Step 1403b: The second NWDAF sends, to the NRF, an NF discovery request that carries an NF profile.

For example, if the carried NF profile includes an NF type (for example, an NWDAF), an NF service name (NF Service, for example, ModelProvision), and a carried analytics ID, the NF discovery request requests to obtain a server NWDAF corresponding to the analytics ID from the NRF.

Step 1404b: The NRF sends, to the second NWDAF, an NF discovery response that carries an NWDAF instance.

The carried NWDAF instance is an instance of the server NWDAF, and an identifier of the NWDAF instance may be represented by using an ID or an IP address of the server NWDAF.

Step 1405b: The first NWDAF sends, to the NRF, an NF discovery request that carries an NF profile.

For example, if the carried NF profile includes an NF type (for example, an NWDAF), an NF service name (NF Service, for example, ModelUpdate), and a carried analytics ID, the NF discovery request requests to obtain a client NWDAF corresponding to the analytics ID from the NRF.

Step 1406b: The NRF sends, to the first NWDAF, an NF discovery response that carries an NWDAF instance.

The carried NWDAF instance is an instance of the client NWDAF, and an identifier of the NWDAF instance may be represented by using an ID or an IP address of the client NWDAF.

It should be noted that the NF discovery response may include one or more client NWDAF instances.

It should be noted that only one of "step 1403b and step 1404b" and "step 1405b and step 1406b" may be performed. In this way, in federated learning, the client NWDAF may actively trigger horizontal federated training to the server NWDAF, or the server NWDAF may actively trigger horizontal federated training to the client NWDAF.

Step 1401b and step 1406b are optional. For example, if the NF profile of the second NWDAF is configured in the first NWDAF and/or the NF profile of the first NWDAF is configured in the second NWDAF, step 1401b to step 1406b may not be performed.

Step 1407b: The second NWDAF sends, to the first NWDAF, a model subscription request that carries the analytics ID.

The model subscription request is used to subscribe, from the first NWDAF, to model index information corresponding to the analytics ID.

Step 1408b: The first NWDAF sends, to the second NWDAF, a model notification 1 that carries model index information 1.

The model index information 1 is index information of a model corresponding to an analytics ID.

The model notification is a model notification corresponding to the model subscription request in step 1707.

Further, the second NWDAF may obtain first information of the corresponding model based on the model index information 1.

Step 1409b: The first NWDAF sends, to the second NWDAF, a model subscription request that carries model index information 1.

The model subscription request requests, from the second NWDAF, to update first information of a model corresponding to the model index information 1, and subscribes to information about an updated model.

Step 1410b: Update a model.

Specifically, the second NWDAF performs local training by using the model information corresponding to the model index information 1, to obtain second information of the model, and determines model index information 2 corresponding to the second information of the model.

Step 1411b: The second NWDAF sends, to the first NWDAF, a model notification that carries model index information 2.

The model notification is a model notification corresponding to the model subscription request in step 1409b.

Step 1412b: Update a model.

Specifically, the first NWDAF performs local training by using the second information of the model corresponding to the model index information 2, to obtain third information of the model, and determines model index information 3 corresponding to the third information of the model.

Optionally, the second NWDAF in step 1407b to step 1410b may be instances of a plurality of client NWDAFs. In this case, the first NWDAF may receive model index information from a plurality of pieces of second NWDAF instances in step 1411b. The first NWDAF obtains a plurality of pieces of corresponding model information based on a plurality of pieces of model index information, and aggregates the plurality of pieces of model information to obtain updated model information.

Step 1413b: The first NWDAF sends, to the second NWDAF, a model notification that carries model index information 3.

The model notification is a model notification corresponding to the model subscription request 1 in step 1407b.

Subsequently, step 1410b to step 1413b may be repeated, and the model index information keeps changing until the first NWDAF determines to stop iteration. Optionally, the first NWDAF may send a model subscription cancellation message to the second NWDAF, in other words, cancel the model subscription request corresponding to step 1409b, to stop iteration.

It should be noted that, in this embodiment, the model index information may include identifier information, and the identifier information indicates the model information corresponding to the model index information. Optionally, the model index information further includes one or more of the following: an analytics type identifier corresponding to the model, an identifier of the model, or version information of the model information.

Based on the foregoing solution, both the first NWDAF and the second NWDAF may update the model to obtain new model information, and send model index information corresponding to the new model information to each other, to implement repeated model iteration, so that model performance can be gradually improved, to finally obtain a model with optimal model performance, and the model performance can be ensured.

FIG. 14(c) is a schematic flowchart of still another communication method according to an embodiment of this application. In this embodiment, the first NWDAF may also be referred to as a training NWDAF, and the second NWDAF may also be referred to as an inference NWDAF or another training NWDAF different from the first NWDAF.

The method includes the following steps.

Step 1401c: The first NWDAF registers with an NRF.

The first NWDAF sends, to the NRF, an NF registration request that carries an NF profile. The NF profile includes information such as an NF type, an NF service name (NF Service Name), and an analytics type identifier (Analytics ID).

The NF type may be an NWDAF.

The NF service name may be a model provision service (ModelProvision).

The analytics type identifier indicates a specific analytics type provided by the training NWDAF, which, for example, may be service experience (Service Experience), network performance (Network Performance), or UE mobility (UE Mobility).

Correspondingly, the NRF stores the NF profile and sends an NF registration response to the first NWDAF.

In an implementation, for an analytics ID, the first NWDAF may register with the NRF when having a model training capability of a model corresponding to the analytics ID. In another implementation, for an analytics ID, the first NWDAF may alternatively register with the NRF when a model corresponding to the analytics ID has been obtained through training.

In an implementation, the first NWDAF may further include second indication information in the NF profile, and the second indication information indicates whether training of a model corresponding to each analytics ID has been completed or is ready to be completed. Alternatively, second indication information is carried in model information in the NF profile. Optionally, when the second indication information indicates that training or a model corresponding to an analytics ID has been completed or is ready to be completed, the NF profile may further carry model description information corresponding to the analytics ID.

In another implementation, the NF profile carries model description information corresponding to the analytics ID. The model description information indicates that the training of the model corresponding to the analytics ID has been completed or is ready to be completed.

The model description information includes one or more of the following information: analytics filter (analytics filter) information, a target of analytics reporting (target of analytics reporting), model performance (model performance) information, or model deployment environment (model deployment environment) information. The analytics filter information indicates an applicable range of a model corresponding to the analytics ID, and the analytics filter information includes one or more of the following: an area, a time period, single network slice selection assistance information (single network slice selection assistance information, S-NSSAI), or a data network name (data network name, DNN).

The target of analytics reporting indicates a terminal corresponding to the model corresponding to the analytics ID, and the target of analytics reporting includes one or more of the following: an identifier of the terminal, an identifier of a terminal group, or information indicating any terminal. The information indicating any terminal indicates that the terminal corresponding to the model corresponding to the analytics ID may be any terminal.

The model performance information indicates performance of a model corresponding to the analytics ID. The model performance information includes one or more of the following: accuracy (Accuracy), precision (Precision), recall rate (Recall), error rate (Error Rate), F1 score (F1 Score), mean squared error (Mean squared error), root mean squared error (Standard Deviation), root mean squared logarithmic error (Logarithm Standard Deviation), mean absolute error (Mean Absolute Deviation), model inference duration (Model Inference Delay), model robustness (Model Robustness), model expandability (Model Expandability), and model interpretability (Model Interpretability)

The model deployment environment information indicates a hardware environment in which the model corresponding to the analytics ID is deployed. The model deployment environment information includes one or more of the following: a quantity of central processing units (central processing units, CPUs), a quantity of graphics processing units (Graphics Processing Units, GPUs), a memory size, or a hard disk size.

Step 1402c: The second NWDAF sends, to the NRF, an NF discovery request that carries NF requirement information.

For example, the NF discovery request is used to obtain a training NWDAF from the NRF based on the NF requirement information. For example, the carried NF requirement information includes an NF type (for example, an NWDAF), an NF service name (for example, ModelProvision), an analytics ID, and first model requirement information corresponding to the analytics ID. The NF discovery request requests to obtain, from the NRF, a training NWDAF that can be provided and that corresponds to the analytics ID, and a model trained by the training NWDAF based on the analytics ID meets the first model requirement information. That a model meets the first model requirement information may be understood as follows: The model trained by the training NWDAF for the analytics ID completely or partially matches the first model requirement information.

The first model requirement information includes one or more of the following information: an analytics filter (analytics filter) information requirement, a target of analytics reporting (target of analytics reporting), model performance (model performance) information, or model deployment environment (model deployment environment) information.

For example, that the model trained for the analytics ID completely matches the first model requirement information may be understood as follows: Analytics filter information, a target of analytics reporting, model performance information, and model deployment environment information that correspond to the model completely meet the analytics filter information, the target of analytics reporting, the model performance information, and the model deployment environment information in the first model requirement information. That the model trained for the analytics ID partially matches the first model requirement information may be understood as follows: Analytics filter information, a target of analytics reporting, model performance information, and model deployment environment information that correspond to the model completely meet one or more of the analytics filter information, the target of analytics reporting, the model performance information, or the model deployment environment information in the first model requirement information.

The analytics filter information indicates an applicable range of a model that the second NWDAF needs to request, and the analytics filter information includes one or more of the following: an area, a time period, S-NSSAI, or a DNN.

The target of analytics reporting indicates a terminal corresponding to the model that the second NWDAF needs to request, and the target of analytics reporting includes one or more of the following: an identifier of the terminal, an identifier of a terminal group, or information indicating any terminal. The information indicating any terminal indicates that the terminal corresponding to the model corresponding to the analytics ID may be any terminal.

The model performance information indicates performance of the model that the second NWDAF needs to request. The model performance information includes one or more of the following: accuracy (Accuracy), precision (Precision), recall rate (Recall), error rate (Error Rate), an F1 score (F1 Score), mean squared error (Mean squared error), root mean squared error (Standard Deviation), root mean squared logarithmic error (Logarithm Standard Deviation), mean absolute error (Mean Absolute Deviation), model inference duration (Model Inference Delay), model robustness (Model Robustness), model expandability (Model Expandability), and model interpretability (Model Interpretability)

The model deployment environment information indicates a hardware environment in which the model that the second NWDAF needs to request is deployed, and the model deployment environment information includes one or more of the following: a quantity of CPUs, a quantity of GPUs, a memory size, or a hard disk size.

Step 1403c: The NRF sends, to the second NWDAF, an NF discovery response that carries address information of the first NWDAF.

For example, the address information may be an ID, an IP address, or a fully qualified domain name (Fully Qualified Domain Name, FQDN).

Optionally, before the NRF returns the address information of the first NWDAF to the second NWDAF, the NRF determines that the first NWDAF is the training NWDAF corresponding to the analytics ID in step 1402c, and the model trained by the first NWDAF based on the analytics ID meets the first model requirement information in step 1402c.

The first NWDAF is an instance of the training NWDAF, and the carried address information of the first NWDAF may be represented by the ID or the IP address of the first NWDAF.

Specifically, the NRF obtains a first NWDAF based on the first model requirement information sent by the second NWDAF. The obtained first NWDAF may meet the first model requirement information. That the obtained first NWDAF may meet the first model requirement information may be understood as follows: The model trained by the first NWDAF for the analytics ID completely or partially matches the first model requirement information.

For example, that the model trained for the analytics ID completely matches the first model requirement information may be understood as follows: Analytics filter information, a target of analytics reporting, model performance information, and model deployment environment information that correspond to the model are respectively the same as the analytics filter information, the target of analytics reporting, the model performance information, and the model deployment environment information in the first model requirement information. That the model trained for the analytics ID partially matches the first model requirement information may be understood as that any one or more of the following cases are met: Analytics filter information corresponding to the model is the same as the analytics filter information in the first model requirement information, target of analytics reporting corresponding to the model is the same as the target of analytics reporting in the first model requirement information, model performance information corresponding to the model is the same as the model performance information in the first model requirement information, or model deployment environment information corresponding to the model is the same as the model deployment environment information in the first model requirement information.

Step 1404c: The second NWDAF sends a first request to the first NWDAF.

Optionally, the first request is a model subscription request, and the model subscription request is used to subscribe, from the first NWDAF, to model index information of a model that corresponds to the analytics ID and meets second model requirement information.

The first request carries the analytics ID and the second model requirement information, and the first request requests, from the first NWDAF, the model index information of the model that corresponds to the analytics ID and meets the second model requirement information. That a model meets second model requirement information may be understood as follows: The model trained by the first NWDAF for the analytics ID completely or partially matches the second model requirement information.

For example, that the model trained for the analytics ID completely matches the second model requirement information may be understood as follows: Analytics filter information, a target of analytics reporting, model performance information, and model deployment environment information that correspond to the model completely meet the analytics filter information, the target of analytics reporting, the model performance information, and the model deployment environment information in the second model requirement information. That the model trained for the analytics ID partially matches the second model requirement information may be understood as follows: Analytics filter information, a target of analytics reporting, model performance information, and model deployment environment information that correspond to the model completely meet one or more of the analytics filter information, the target of analytics reporting, the model performance information, or the model deployment environment information in the second model requirement information.

The model index information may be one or more of the following information: a model identifier (model ID), a model version number (for example, version), location information (for example, location), address information, or the like. The model identifier identifies the model, the model version number indicates a model version, and the location information or the address information indicates a storage location of the model. Optionally, when the model index information is the location information or the address information, the location information or the address information may alternatively include the model version. Optionally, the address information may include one or more of the following information: an IP address, an FQDN, or a URL.

The second model requirement information herein includes time information, and includes a part or all of the first model requirement information. The time information indicates a time point at which the model index information from the first NWDAF is expected to be received. The time information may be absolute time or relative time.

In an implementation, the second NWDAF may send the model subscription request to the first NWDAF by triggering an Nnwdaf_MLModelProvision_Subscribe service operation or an Nnwdaf_MLModelProvision_Unsubscribe service operation to the first NWDAF.

Step 1405c: The first NWDAF obtains model index information based on the second model requirement information and the analytics ID.

The model index information of the model that corresponds to the analytics ID and meets the second model requirement information is obtained by the first NWDAF.

The analytics ID herein is an analytics ID in the model subscription request.

A manner in which the first NWDAF obtains model index information may be as follows:

(1) If the first NWDAF determines that a local model corresponding to the analytics ID exists, and the local model meets the second model requirement information, the first NWDAF does not need to further collect data from another network element, but may directly obtain model index information of the local model.

(2) If the first NWDAF determines that a local model corresponding to the analytics ID exists, but the local model does not meet the second model requirement information, the first NWDAF further collects data from another network element, retrains the local model based on the collected data, to obtain a new model, and obtains model index information of the new model. That the local model does not meet the second model requirement information may be understood as follows: Analytics filter information, a target of analytics reporting, model performance information, and model deployment environment information that correspond to the local model do not meet any one of the analytics filter information, the target of analytics reporting, the model performance information, and the model deployment environment information in the first model requirement information.

(3) If the first NWDAF determines that no local model corresponding to the analytics ID exists, the first NWDAF further collects data from another network element, obtains an initial model through training based on the collected data, and obtains model index information of the initial model.

For the foregoing three operations, time periods in which the second NWDAF obtains the model index information are sequentially prolonged. This is because a time period required for model retraining is much shorter than time period required for model initial training.

Step 1406c: The first NWDAF sends the model index information to the second NWDAF.

A model corresponding to the model index information is the model that is obtained by the first NWDAF and that corresponds to the analytics ID and that meets the second model requirement information.

The second NWDAF may obtain, based on the model index information, the model corresponding to the analytics ID, to obtain, through inference, a data analysis result corresponding to the analytics ID.

Optionally, if the first NWDAF determines that the model index information cannot be sent to the second NWDAF before the time point indicated by the time information in the second model requirement information, the first NWDAF may send first indication information to the second NWDAF, where the first indication information indicates that the model index information cannot be sent before the time point indicated by the time information. The first indication information may be referred to as an error response or an error notification.

Based on the foregoing solution, by using the first model requirement information, the second NWDAF may be assisted in quickly obtaining, from the NRF, a first NWDAF that meets the first model requirement information as much as possible, so that the first NWDAF can be precisely provided for the second NWDAF. By using the second model requirement information, the second NWDAF may be assisted in quickly obtaining, from the first NWDAF, a model that meets the second model requirement information as much as possible, so that the model can be precisely provided for the second NWDAF.

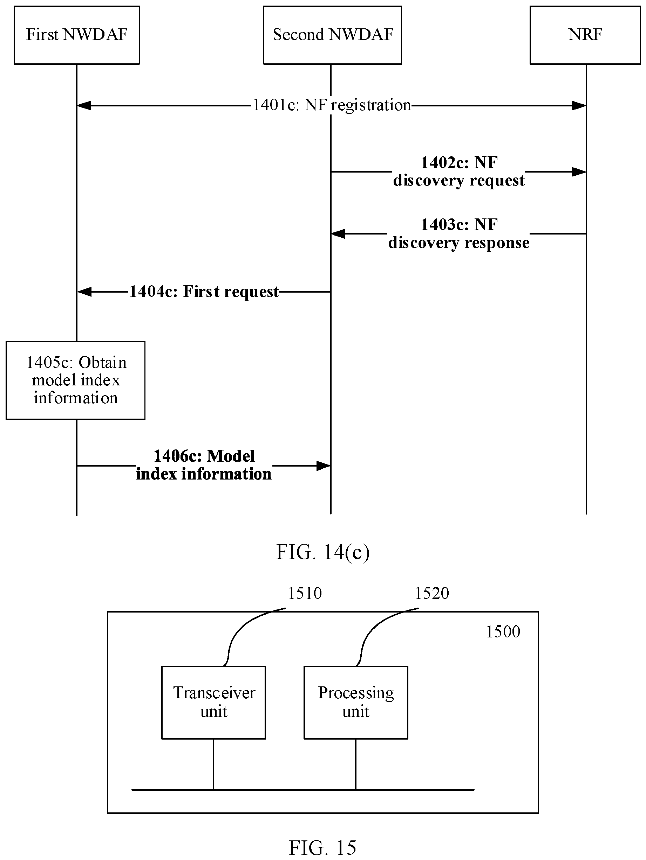

FIG. 15 is a schematic diagram of a communication apparatus according to an embodiment of this application. The communication apparatus 1500 includes a transceiver unit 1510 and a processing unit 1520.

In a first embodiment, the communication apparatus is configured to implement steps corresponding to the first data analytics network element in the foregoing embodiments.

The transceiver unit 1510 is configured to receive first information from a second data analytics network element, where the first information includes a performance report of a model, and the performance report of the model indicates a performance evaluation result of the model, or the performance report of the model indicates that a performance evaluation result of the model does not meet a requirement for a performance indicator of the model; and send second information to the second data analytics network element, where the second information includes second model information of the model. The processing unit 1520 is configured to update first model information of the model based on the performance report of the model, to obtain the second model information.

In a possible implementation, the transceiver unit 1510 is further configured to send third information to the second data analytics network element, where the third information includes the performance indicator of the model, and the performance indicator of the model is used to obtain the performance evaluation result of the model.

In a possible implementation, the transceiver unit 1510 is further configured to send the second information to a third data analytics network element.

In a possible implementation, that the transceiver unit 1510 is configured to receive first information from a second data analytics network element specifically includes: receiving the first information from the second data analytics network element by using a network repository network element. That the transceiver unit 1510 is configured to send second information to the second data analytics network element specifically includes: sending the second information to the second data analytics network element by using the network repository network element.

In a possible implementation, the performance indicator of the model includes one or more of the following: precision, accuracy, error rate, recall rate, F1 score, mean squared error, root mean squared error, root mean squared logarithmic error, mean absolute error, model inference duration, model robustness, model expandability, and model interpretability.

In a possible implementation, the third information further includes one or more of the following: an analytics type identifier, an identifier of the model, and an identifier of a submodel, where the analytics type identifier indicates an analytics type of the model.

In a possible implementation, the third information further includes one or both of the following: a reporting periodicity and threshold information, where the reporting periodicity indicates a time point at which the performance report of the model is reported, and the threshold information indicates a condition for reporting the performance report of the model.

In a possible implementation, the first information further includes one or more of the following information corresponding to the performance report of the model: time, an area, and a slice.

In a possible implementation, the second information further includes one or more of the following: the identifier of the model, the identifier of the submodel, the performance evaluation result of the model, hardware capability information corresponding to the performance evaluation result of the model, a size of the model, and the model inference duration.

In a second embodiment, the communication apparatus is configured to implement steps corresponding to the second data analytics network element in the foregoing embodiments.

The transceiver unit 1510 is configured to send first information to a first data analytics network element, where the first information includes a performance report of a model, and the performance report of the model indicates a performance evaluation result of the model, or the performance report of the model indicates that a performance evaluation result of the model does not meet a requirement for a performance indicator of the model; and receive second information from the first data analytics network element, where the second information includes second model information of the model, and the second model information is obtained by updating first model information of the model based on the performance report of the model. The processing unit 1520 is configured to update the model based on the second model information.

In a possible implementation, the transceiver unit 1510 is further configured to receive third information from the first data analytics network element, where the third information includes the performance indicator of the model, and the performance indicator of the model is used to obtain the performance evaluation result of the model.

In a possible implementation, that the transceiver unit 1510 is configured to send first information to a first data analytics network element specifically includes: sending the first information to the first data analytics network element by using a network repository network element. That the transceiver unit 1510 is configured to receive second information from the first data analytics network element specifically includes: receiving the second information from the first data analytics network element by using the network repository network element.

In a possible implementation, the performance indicator of the model includes one or more of the following: precision, accuracy, error rate, recall rate, F1 score, mean squared error, root mean squared error, root mean squared logarithmic error, mean absolute error, model inference duration, model robustness, model expandability, and model interpretability.

In a possible implementation, the third information further includes one or more of the following: an analytics type identifier, an identifier of the model, and an identifier of a submodel, where the analytics type identifier indicates an analytics type of the model.

In a possible implementation, the third information further includes one or both of the following: a reporting periodicity and threshold information, where the reporting periodicity indicates a time point at which the performance report of the model is reported, and the threshold information indicates a condition for reporting the performance report of the model.

In a possible implementation, the first information further includes one or more of the following information corresponding to the performance report of the model: time, an area, and a slice.

In a possible implementation, the second information further includes one or more of the following: the identifier of the model, the identifier of the submodel, the performance evaluation result of the model, hardware capability information corresponding to the performance evaluation result of the model, a size of the model, and the model inference duration.

In a third embodiment, the communication apparatus is configured to implement steps corresponding to the first data analytics network element in the foregoing embodiments.

The processing unit 1520 is configured to update first information of a model to second information of the model; and determine index information of the second information of the model, where the index information of the second information includes first identifier information, and the first identifier information indicates the second information of the model. The transceiver unit 1510 is configured to send the index information of the second information to a second data analytics network element, where the index information of the second information is used to obtain the second information of the model. The index information of the second information of the model may also be referred to as model index information corresponding to the second information.

In a possible implementation, the index information of the second information further includes one or more of the following: an analytics type identifier corresponding to the model, an identifier of the model, or version information of the second information of the model.

In a possible implementation, the transceiver unit 1510 is configured to receive index information of the first information of the model from the second data analytics network element, where the index information of the first information includes second identifier information, and the second identifier information indicates the first information of the model. The processing unit 1520 is configured to obtain the first information of the model based on the index information of the first information.

In a possible implementation, the index information of the first information further includes one or more of the following: the analytics type identifier corresponding to the model, the identifier of the model, or version information of the first information of the model.

In a possible implementation, the processing unit 1520 is configured to obtain a first request from the second data analytics network element, where the first request is used to update the first information of the model, and the first request includes index information of the first information of the model; obtain the first information of the model based on the index information of the first information; and update the first information of the model to obtain the second information of the model.

In a possible implementation, the transceiver unit 1510 is configured to send a second request to the second data analytics network element, where the second request requests the index information of the first information of the model, and the second request includes the analytics type identifier corresponding to the model; and receive a second response from the second data analytics network element, where the second response includes the index information of the first information of the model.

In a possible implementation, the transceiver unit 1510 is configured to receive the index information of the first information of the model from the second data analytics network element by using a network repository network element.

In a possible implementation, the transceiver unit 1510 is configured to send the index information of the second information of the model to the second data analytics network element by using the network repository network element.

In a possible implementation, the first data analytics network element is a client data analytics network element in distributed learning, and the second data analytics network element is a server data analytics network element in distributed learning.

In a possible implementation, the distributed learning is federated learning.

In a possible implementation, the first data analytics network element is a data analytics network element supporting an inference function, and the second data analytics network element is a data analytics network element supporting a training function.

In a fourth embodiment, the communication apparatus is configured to implement steps corresponding to the second data analytics network element in the foregoing embodiments.

The transceiver unit 1510 is configured to send a first request to a first data analytics network element, where the first request carries an analytics type identifier and second model requirement information, and the first request requests model index information of a model that corresponds to the analytics type identifier and meets the second model requirement information; and receive the model index information from the first data analytics network element.

In a possible implementation, the transceiver unit 1510 is configured to send a network function discovery request to a network repository network element, where the network function discovery request includes the analytics type identifier and first model requirement information, and the network function discovery request requests to obtain a data analytics network element that can provide a model corresponding to the analytics type identifier and meeting the first model requirement information; and receive address information of the first data analytics network element from the network repository network element.

In a possible implementation, the first model requirement information includes one or more of the following information: analytics filter information, a target of analytics reporting, model performance information, or model deployment environment information, where

the analytics filter information indicates an applicable range of a model that the second data analytics network element needs to request, and the analytics filter information includes one or more of the following: an area, a time period, single network slice selection assistance information, or a data network name;

the target of analytics reporting indicates a terminal corresponding to the model that the second data analytics network element needs to request, and the target of analytics reporting includes one or more of the following: an identifier of the terminal, an identifier of a terminal group, or information indicating any terminal;

the model performance information indicates performance of the model that the second data analytics network element needs to request, and the model performance information includes one or more of the following: precision, accuracy, error rate, recall rate, F1 score, mean squared error, root mean squared error, root mean squared logarithmic error, mean absolute error, model inference duration, model robustness, model expandability, and model interpretability; and

the model deployment environment information indicates a hardware environment in which the model that the second data analytics network element needs to request is deployed, and the model deployment environment information includes one or more of the following: a quantity of central processing units, a quantity of graphics processing units, a memory size, or a hard disk size.

In a possible implementation, the second model requirement information includes a part or all of the first model requirement information.

In a possible implementation, the second model requirement information includes time information, where the time information indicates a time point at which the model index information from the first data analytics network element is expected to be received.

In a possible implementation, the transceiver unit 1510 is configured to receive first indication information from the first data analytics network element, where the first indication information indicates that the model index information cannot be sent before the time point indicated by the time information.

In a fifth embodiment, the communication apparatus is configured to implement steps corresponding to the first data analytics network element in the foregoing embodiments.

The transceiver unit 1510 is configured to receive a first request from a second data analytics network element, where the first request carries an analytics type identifier and second model requirement information, and the first request requests model index information of a model that corresponds to the analytics type identifier and meets the second model requirement information; and send the model index information to the second data analytics network element. The processing unit 1520 is configured to obtain the model index information based on the second model requirement information and the analytics type identifier.

In a possible implementation, the second model requirement information includes time information, where the time information indicates a time point at which the model index information from the first data analytics network element is expected to be received.

In a possible implementation, the transceiver unit 1510 is configured to send first indication information to the second data analytics network element, where the first indication information indicates that the model index information cannot be sent before the time point indicated by the time information.

In a possible implementation, the transceiver unit 1510 is configured to send a network function registration request to a network repository network element, where the network function registration request carries the analytics type identifier and model information, the model information includes second indication information, and the second indication information indicates whether training of the model corresponding to the analytics type identifier has been completed or is ready to be completed.

In a possible implementation, when the second indication information indicates that the training of the model corresponding to the analytics type identifier has been completed or is ready to be completed, the model information further includes model description information, and the model description information includes one or more of the following information: analytics filter information, a target of analytics reporting, model performance information, or model deployment environment information, where

the analytics filter information indicates an applicable range of a model corresponding to the analytics type identifier, and the analytics filter information includes one or more of the following: an area, a time period, single network slice selection assistance information, or a data network name;
the target of analytics reporting indicates a terminal corresponding to the model corresponding to the analytics type identifier, and the target of analytics reporting includes one or more of the following: an identifier of the terminal, an identifier of a terminal group, or information indicating any terminal;
the model performance information indicates performance of the model corresponding to the analytics type identifier, and the model performance information includes one or more of the following: precision, accuracy, error rate, recall rate, F1 score, mean squared error, root mean squared error, root mean squared logarithmic error, mean absolute error, model inference duration, model robustness, model expandability, and model interpretability; and
the model deployment environment information indicates a hardware environment in which the model corresponding to the analytics type identifier is deployed, and the model deployment environment information includes one or more of the following: a quantity of central processing units, a quantity of graphics processing units, a memory size, or a hard disk size.

In a sixth embodiment, the communication apparatus is configured to implement steps corresponding to the network repository network element in the foregoing embodiments.

The transceiver unit 1510 is configured to receive a network function discovery request from a second data analytics network element, where the network function discovery request includes an analytics type identifier and first model requirement information, and the network function discovery request requests to obtain a data analytics network element that can provide a model corresponding to the analytics type identifier and meeting the first model requirement information; and send the address information of the first data analytics network element to the second data analytics network element. The processing unit 1520 is configured to obtain address information of a first data analytics network element based on the first model requirement information and the analytics type identifier.

In a possible implementation, the transceiver unit 1510 is configured to receive a network function registration request from the first data analytics network element, where the network function registration request carries the analytics type identifier and model information, the model information includes second indication information, and the second indication information indicates whether training of the model corresponding to the analytics type identifier has been completed or is ready to be completed.

In a possible implementation, when the second indication information indicates that the training of the model corresponding to the analytics type identifier has been completed or is ready to be completed, the model information further includes model description information, and the model description information includes one or more of the following information: analytics filter information, a target of analytics reporting, model performance information, or model deployment environment information, where

the analytics filter information indicates an applicable range of a model corresponding to the analytics type identifier, and the analytics filter information includes one or more of the following: an area, a time period, single network slice selection assistance information, or a data network name;
the target of analytics reporting indicates a terminal corresponding to the model corresponding to the analytics type identifier, and the target of analytics reporting includes one or more of the following: an identifier of the terminal, an identifier of a terminal group, or information indicating any terminal;
the model performance information indicates performance of the model corresponding to the analytics type identifier, and the model performance information includes one or more of the following: precision, accuracy, error rate, recall rate, F1 score, mean squared error, root mean squared error, root mean squared logarithmic error, mean absolute error, model inference duration, model robustness, model expandability, and model interpretability; and
the model deployment environment information indicates a hardware environment in which the model corresponding to the analytics type identifier is deployed, and the model deployment environment information includes one or more of the following: a quantity of central processing units, a quantity of graphics processing units, a memory size, or a hard disk size.

In a possible implementation, the first model requirement information includes one or more of the following information: analytics filter information, a target of analytics reporting, model performance information, or model deployment environment information, where

the analytics filter information indicates an applicable range of a model that the second data analytics network element needs to request, and the analytics filter information includes one or more of the following: an area, a time period, single network slice selection assistance information, or a data network name;

the target of analytics reporting indicates a terminal corresponding to the model that the second data analytics network element needs to request, and the target of analytics reporting includes one or more of the following: an identifier of the terminal, an identifier of a terminal group, or information indicating any terminal;

the model performance information indicates performance of the model that the second data analytics network element needs to request, and the model performance information includes one or more of the following: precision, accuracy, error rate, recall rate, F1 score, mean squared error, root mean squared error, root mean squared logarithmic error, mean absolute error, model inference duration, model robustness, model expandability, and model interpretability; and

the model deployment environment information indicates a hardware environment in which the model that the second data analytics network element needs to request is deployed, and the model deployment environment information includes one or more of the following: a quantity of central processing units, a quantity of graphics processing units, a memory size, or a hard disk size.

Optionally, the communication apparatus may further include a storage unit. The storage unit is configured to store data or instructions (which may also be referred to as code or programs). The foregoing units may interact with or be coupled to the storage unit, to implement a corresponding method or function. For example, the processing unit 1520 may read the data or the instructions in the storage unit, so that the communication apparatus implements the methods in the foregoing embodiments.

It should be understood that division into the units in the communication apparatus is merely logical function division. During actual implementation, all or some of the units may be integrated into one physical entity, or may be physically separated. In addition, all the units in the communication apparatus may be implemented by software invoked by a processing element, or may be implemented by hardware; or some units may be implemented by software invoked by a processing element, and some units may be implemented by hardware. For example, each unit may be a separately disposed processing element, or may be integrated into a chip of the communication apparatus for implementation. In addition, each unit may alternatively be stored in a memory in a form of a program to be invoked by a processing element of the communication apparatus to perform a function of the unit. In addition, some or all of the units may be integrated together, or the units may be implemented independently. The processing element herein may also be referred to as a processor, and may be an integrated circuit having a signal processing capability. During implementation, the steps in the foregoing methods or the foregoing units may be implemented by using a hardware integrated logic circuit in the processing element, or may be implemented by software invoked by the processing element.

In an example, the unit in any one of the foregoing communication apparatuses may be one or more integrated circuits configured to implement the foregoing methods, for example, one or more application-specific integrated circuits (application-specific integrated circuits, ASICs), or one or more microprocessors (digital signal processors, DSPs), or one or more field programmable gate arrays (field programmable gate arrays, FPGAs), or a combination of at least two of these integrated circuit forms. For another example, when the unit in the communication apparatus may be implemented by a program invoked by a processing element, the processing element may be a general-purpose processor, for example, a central processing unit (central processing unit, CPU) or another processor that can invoke the program. In another example, the units may be integrated together and implemented in a form of a system-on-a-chip (system-on-a-chip, SOC).

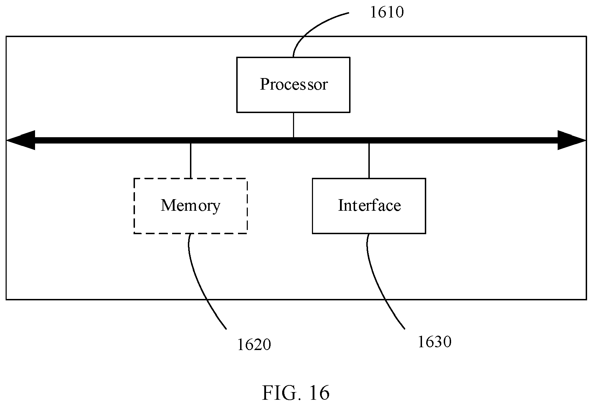

FIG. 16 is a schematic diagram of a communication apparatus according to an embodiment of this application. The communication apparatus is configured to implement an operation of the first data analytics network element or the second data analytics network element in the foregoing embodiment. As shown in FIG. 16, the communication apparatus includes: a processor 1610 and an interface 1630. Optionally, the communication apparatus further includes a memory 1620. The interface 1630 is configured to communicate with another device.

The method performed by the first data analytics network element or the second data analytics network element in the foregoing embodiment may be implemented by the processor 1610 by invoking a program stored in a memory (which may be the memory 1620 in the first data analytics network element or the second data analytics network element, or may be an external memory). In other words, the first data analytics network element or the second data analytics network element may include the processor 1610, and the processor 1610 performs, by invoking the program in the memory, the method performed by the first data analytics network element or the second data analytics network element in the foregoing method embodiment. The processor herein may be an integrated circuit having a signal processing capability, for example, a CPU. The first data analytics network element or the second data analytics network element may be implemented by using one or more integrated circuits configured to implement the foregoing method, for example, one or more ASICs, one or more microprocessors DSPs, one or more FPGAs, or a combination of at least two of the integrated circuits. Alternatively, the foregoing implementations may be combined.

Specifically, functions/implementation processes of the transceiver unit 1510 and the processing unit 1520 in FIG. 15 may be implemented by the processor 1610 in the communication apparatus 1600 shown in FIG. 16 by invoking computer-executable instructions stored in the memory 1620. Alternatively, functions/implementation processes of the processing unit 1520 in FIG. 15 may be implemented by the processor 1610 in the communication apparatus 1600 shown in FIG. 16 by invoking computer-executable instructions stored in the memory 1620, and functions/implementation processes of the transceiver unit 1510 in FIG. 15 may be implemented through the interface 1630 in the communication apparatus 1600 shown in FIG. 16. For example, functions/implementation processes of the transceiver unit 1510 may be implemented by the processor by invoking program instructions in the memory to drive the interface 1630.

Persons of ordinary skill in the art may understand that various reference numerals such as "first" and "second" in this application are merely used for differentiation for ease of description, and are not used to limit a scope of embodiments of this application, or represent a sequence. "And/or" describes an association relationship between associated objects and indicates that three relationships may exist. For example, A and/or B may indicate the following three cases: Only A exists, both A and B exist, and only B exists. The character "/" usually indicates an "or" relationship between the associated objects. "At least one" means one or more. "At least two" means two or more. "At least one", "any one", or a similar expression thereof means any combination of the items, including a singular item (piece) or any combination of plural items (pieces). For example, at least one (piece or type) of a, b, or c may indicate: a, b, c, a and b, a and c, b and c, or a, b, and c, where a, b, and c may be singular or plural. "A plurality of" means two or more, and another quantifier is similar to this.

It should be understood that, in embodiments of this application, sequence numbers of the foregoing processes do not mean execution sequences. An execution sequence of the processes should be determined based on functions and internal logic of the processes, and should not be construed as any limitation on the implementation processes of embodiments of the present invention.

It may be clearly understood by persons skilled in the art that, for the purpose of convenient and brief description, for detailed working processes of the foregoing system, apparatus, and unit, refer to corresponding processes in the foregoing method embodiments. Details are not described herein again.

All or some of the foregoing embodiments may be implemented by software, hardware, firmware, or any combination thereof. When software is used to implement embodiments, all or some of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state drive, SSD)), or the like.

The various illustrative logical units and circuits described in embodiments of this application may implement or operate the described functions by using a general purpose processor, a digital signal processor, an application-specific integrated circuit (ASIC), a field programmable gate array (FPGA) or another programmable logical apparatus, a discrete gate or transistor logic, a discrete hardware component, or a design of any combination thereof. The general purpose processor may be a microprocessor. Optionally, the general purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors in combination with a digital signal processor core, or any other similar configuration.

Steps of the methods or algorithms described in embodiments of this application may be directly embedded into hardware, a software unit executed by a processor, or a combination thereof. The software unit may be stored in a random access memory (Random Access Memory, RAM), a flash memory, a read-only memory (Read-Only Memory, ROM), an EPROM memory, an EEPROM memory, a register, a hard disk, a removable magnetic disk, a CD-ROM, or a storage medium of any other form in the art. For example, the storage medium may connect to a processor so that the processor may read information from the storage medium and write information to the storage medium. Alternatively, the storage medium may be integrated into a processor. The processor and the storage medium may be disposed in the ASIC.

These computer program instructions may also be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

In one or more example designs, the functions described in this application may be implemented by hardware, software, firmware, or any combination thereof. If the functions are implemented by software, these functions may be stored in a computer-readable medium or are transmitted to the computer-readable medium in a form of one or more instructions or code. The computer readable medium includes a computer storage medium and a communication medium that enables a computer program to move from one place to another. The storage medium may be an available medium that may be accessed by any general-purpose or dedicated computer. For example, such a computer-readable medium may include but is not limited to a RAM, a ROM, an EEPROM, a CD-ROM, or another optical disc storage, a disk storage or another magnetic storage apparatus, or any other medium that may be used to bear or store program code, where the program code is in a form of an instruction or a data structure or in a form that can be read by a general-purpose or special computer or a general-purpose or special processor. In addition, any connection may be appropriately defined as a computer-readable medium. For example, if software is transmitted from a website, a server, or another remote resource by using a coaxial cable, an optical fiber computer, a twisted pair, a digital subscriber line (DSL) or in a wireless manner, such as infrared, radio, or microwave, the software is included in a defined computer-readable medium. The disk (disk) and the disc (disc) include a compact disc, a laser disc, an optical disc, a digital versatile disc (English: Digital Versatile Disc, DVD for short), a floppy disk, and a Blu-ray disc. The disc usually copies data in a magnetic manner, and the disk usually optically copies data in a laser manner. The foregoing combination may also be included in the computer-readable medium.

Although this application is described with reference to specific features and embodiments thereof, it is clear that various modifications and combinations may be made to this application without departing from the spirit and scope of this application. Correspondingly, the specification and the accompanying drawings are merely example descriptions in this application defined by the appended claims, and are intended to cover any of or all modifications, variations, combinations equivalents within the scope of this application. Clearly, persons skilled in the art can make various modifications and variations to this application without departing from the protection scope of this application. This application is intended to cover these modifications and variations of this application provided that they fall within the scope of protection defined by the following claims and their equivalent technologies.

**Claims**

1. A communication method, comprising:

   receiving, by a first data analytics network element, first information from a second data analytics network element, wherein the first information comprises a performance report of a model, and the performance report of the model indicates a performance evaluation result of the model, or the performance report of the model indicates that a performance evaluation result of the model does not meet a requirement for a performance indicator of the model;
   updating, by the first data analytics network element, first model information of the model based on the performance report of the model, to obtain second model information of the model; and
   sending, by the first data analytics network element, second information to the second data analytics network element, wherein the second information comprises the second model information.

2. The method according to claim 1, further comprising:
   sending, by the first data analytics network element, third information to the second data analytics network element, wherein the third information comprises the performance indicator of the model, and the performance indicator of the model is used to obtain the performance evaluation result of the model.

3. The method according to claim 2, wherein the performance indicator of the model comprises one or more of the following: precision, accuracy, error rate, recall rate, F1 score, mean squared error, root mean squared error, root mean squared logarithmic error, mean absolute error, model inference duration, model robustness, model expandability, and model interpretability.

4. The method according to claim 2 or 3, wherein the third information further comprises one or more of the following: an analytics type identifier, an identifier of the model, and an identifier of a submodel, wherein the analytics type identifier indicates an analytics type of the model.

5. The method according to any one of claims 2 to 4, wherein the third information further comprises one or both of the following: a reporting periodicity and threshold information, wherein the reporting periodicity indicates a time point at which the performance report of the model is reported, and the threshold information indicates a condition for reporting the performance report of the model.

6. The method according to any one of claims 1 to 5, wherein the first information further comprises one or more of the following information corresponding to the performance report of the model: time, an area, and a slice.

7. The method according to any one of claims 1 to 6, wherein the second information further comprises one or more of the following: the identifier of the model, the identifier of the submodel, the performance evaluation result of the model, hardware capability information corresponding to the performance evaluation result of the model, a size of the model, and the model inference duration.

8. The method according to any one of claims 1 to 7, further comprising:
sending, by the first data analytics network element, the second information to a third data analytics network element.

9. The method according to any one of claims 1 to 8, wherein the receiving, by a first data analytics network element, first information from a second data analytics network element comprises:

receiving, by the first data analytics network element, the first information from the second data analytics network element by using a network repository network element; and
the sending, by the first data analytics network element, second information to the second data analytics network element comprises:
sending, by the first data analytics network element, the second information to the second data analytics network element by using the network repository network element.

10. A communication method, comprising:

sending, by a second data analytics network element, first information to a first data analytics network element, wherein the first information comprises a performance report of a model, and the performance report of the model indicates a performance evaluation result of the model, or the performance report of the model indicates that a performance evaluation result of the model does not meet a requirement for a performance indicator of the model;
receiving, by the second data analytics network element, second information from the first data analytics network element, wherein the second information comprises second model information of the model, and the second model information is obtained by updating first model information of the model based on the performance report of the model; and
updating, by the second data analytics network element, the model based on the second model information.

11. The method according to claim 10, further comprising:
receiving, by the second data analytics network element, third information from the first data analytics network element, wherein the third information comprises the performance indicator of the model, and the performance indicator of the model is used to obtain the performance evaluation result of the model.

12. The method according to claim 11, wherein the performance indicator of the model comprises one or more of the following: precision, accuracy, error rate, recall rate, F1 score, mean squared error, root mean squared error, root mean squared logarithmic error, mean absolute error, model inference duration, model robustness, model expandability, and model interpretability.

13. The method according to claim 11 or 12, wherein the third information further comprises one or more of the following:

an analytics type identifier, an identifier of the model, and an identifier of a submodel, wherein the analytics type identifier indicates an analytics type of the model.

14. The method according to any one of claims 11 to 13, wherein the third information further comprises one or both of the following: a reporting periodicity and threshold information, wherein the reporting periodicity indicates a time point at which the performance report of the model is reported, and the threshold information indicates a condition for reporting the performance report of the model.

15. The method according to any one of claims 10 to 14, wherein the first information further comprises one or more of the following information corresponding to the performance report of the model: time, an area, and a slice.

16. The method according to any one of claims 10 to 15, wherein the second information further comprises one or more of the following: the identifier of the model, the identifier of the submodel, the performance evaluation result of the model, hardware capability information corresponding to the performance evaluation result of the model, a size of the model, and the model inference duration.

17. The method according to any one of claims 10 to 16, wherein the sending, by a second data analytics network element, first information to a first data analytics network element comprises:

sending, by the second data analytics network element, the first information to the first data analytics network element by using a network repository network element; and
the receiving, by the second data analytics network element, second information from the first data analytics network element comprises:
receiving, by the second data analytics network element, the second information from the first data analytics network element by using the network repository network element.

18. A communication method, comprising:

sending, by a second data analytics network element, a first request to a first data analytics network element, wherein the first request carries an analytics type identifier and second model requirement information, and the first request requests model index information of a model that corresponds to the analytics type identifier and meets the second model requirement information; and
receiving, by the second data analytics network element, the model index information from the first data analytics network element.

19. The method according to claim 18, further comprising:

sending, by the second data analytics network element, a network function discovery request to a network repository network element, wherein the network function discovery request comprises the analytics type identifier and first model requirement information, and the network function discovery request requests to obtain a data analytics network element that can provide a model corresponding to the analytics type identifier and meeting the first model requirement information; and
receiving, by the second data analytics network element, address information of the first data analytics network element from the network repository network element.

20. The method according to claim 19, wherein the first model requirement information comprises one or more of the following information: analytics filter information, a target of analytics reporting, model performance information, or model deployment environment information, wherein

the analytics filter information indicates an applicable range of a model that the second data analytics network element needs to request, and the analytics filter information comprises one or more of the following: an area, a time period, single network slice selection assistance information, or a data network name;
the target of analytics reporting indicates a terminal corresponding to the model that the second data analytics network element needs to request, and the target of analytics reporting comprises one or more of the following: an identifier of the terminal, an identifier of a terminal group, or information indicating any terminal;
the model performance information indicates performance of the model that the second data analytics network element needs to request, and the model performance information comprises one or more of the following: precision, accuracy, error rate, recall rate, F1 score, mean squared error, root mean squared error, root mean squared logarithmic error, mean absolute error, model inference duration, model robustness, model expandability, and model interpretability; and

the model deployment environment information indicates a hardware environment in which the model that the second data analytics network element needs to request is deployed, and the model deployment environment information comprises one or more of the following: a quantity of central processing units, a quantity of graphics processing units, a memory size, or a hard disk size.

21. The method according to claim 20, wherein the second model requirement information comprises a part or all of the first model requirement information.

22. The method according to any one of claims 18 to 21, wherein the second model requirement information comprises time information, wherein the time information indicates a time point at which the model index information from the first data analytics network element is expected to be received.

23. The method according to claim 22, further comprising:
receiving, by the second data analytics network element, first indication information from the first data analytics network element, wherein the first indication information indicates that the model index information cannot be sent before the time point indicated by the time information.

24. A communication method, comprising:

receiving, by a first data analytics network element, a first request from a second data analytics network element, wherein the first request carries an analytics type identifier and second model requirement information, and the first request requests model index information of a model that corresponds to the analytics type identifier and meets the second model requirement information;
obtaining, by the first data analytics network element, the model index information based on the second model requirement information and the analytics type identifier; and
sending, by the first data analytics network element, the model index information to the second data analytics network element.

25. The method according to claim 24, wherein the second model requirement information comprises time information, wherein the time information indicates a time point at which the model index information from the first data analytics network element is expected to be received.

26. The method according to claim 25, further comprising:
sending, by the first data analytics network element, first indication information to the second data analytics network element, wherein the first indication information indicates that the model index information cannot be sent before the time point indicated by the time information.

27. The method according to any one of claims 24 to 26, further comprising:
sending, by the first data analytics network element, a network function registration request to a network repository network element, wherein the network function registration request carries the analytics type identifier and model information, the model information comprises second indication information, and the second indication information indicates whether training of the model corresponding to the analytics type identifier has been completed or is ready to be completed.

28. The method according to claim 27, wherein when the second indication information indicates that the training of the model corresponding to the analytics type identifier has been completed or is ready to be completed, the model information further comprises model description information, and the model description information comprises one or more of the following information: analytics filter information, a target of analytics reporting, model performance information, or model deployment environment information, wherein

the analytics filter information indicates an applicable range of a model corresponding to the analytics type identifier, and the analytics filter information comprises one or more of the following: an area, a time period, single network slice selection assistance information, or a data network name;
the target of analytics reporting indicates a terminal corresponding to the model corresponding to the analytics type identifier, and the target of analytics reporting comprises one or more of the following: an identifier of the terminal, an identifier of a terminal group, or information indicating any terminal;

the model performance information indicates performance of the model corresponding to the analytics type identifier, and the model performance information comprises one or more of the following: precision, accuracy, error rate, recall rate, F1 score, mean squared error, root mean squared error, root mean squared logarithmic error, mean absolute error, model inference duration, model robustness, model expandability, and model interpretability; and
the model deployment environment information indicates a hardware environment in which the model corresponding to the analytics type identifier is deployed, and the model deployment environment information comprises one or more of the following: a quantity of central processing units, a quantity of graphics processing units, a memory size, or a hard disk size.

29. A communication method, comprising:

receiving, by a network repository network element, a network function discovery request from a second data analytics network element, wherein the network function discovery request comprises an analytics type identifier and first model requirement information, and the network function discovery request requests to obtain a data analytics network element that can provide a model corresponding to the analytics type identifier and meeting the first model requirement information;
obtaining, by the network repository network element, address information of a first data analytics network element based on the first model requirement information and the analytics type identifier; and
sending, by the network repository network element, the address information of the first data analytics network element to the second data analytics network element.

30. The method according to claim 29, further comprising:
receiving, by the network repository network element, a network function registration request from the first data analytics network element, wherein the network function registration request carries the analytics type identifier and model information, the model information comprises second indication information, and the second indication information indicates whether training of the model corresponding to the analytics type identifier has been completed or is ready to be completed.

31. The method according to claim 30, wherein when the second indication information indicates that the training of the model corresponding to the analytics type identifier has been completed or is ready to be completed, the model information further comprises model description information, and the model description information comprises one or more of the following information: analytics filter information, a target of analytics reporting, model performance information, or model deployment environment information, wherein

the analytics filter information indicates an applicable range of a model corresponding to the analytics type identifier, and the analytics filter information comprises one or more of the following: an area, a time period, single network slice selection assistance information, or a data network name;
the target of analytics reporting indicates a terminal corresponding to the model corresponding to the analytics type identifier, and the target of analytics reporting comprises one or more of the following: an identifier of the terminal, an identifier of a terminal group, or information indicating any terminal;
the model performance information indicates performance of the model corresponding to the analytics type identifier, and the model performance information comprises one or more of the following: precision, accuracy, error rate, recall rate, F1 score, mean squared error, root mean squared error, root mean squared logarithmic error, mean absolute error, model inference duration, model robustness, model expandability, and model interpretability; and
the model deployment environment information indicates a hardware environment in which the model corresponding to the analytics type identifier is deployed, and the model deployment environment information comprises one or more of the following: a quantity of central processing units, a quantity of graphics processing units, a memory size, or a hard disk size.

32. The method according to claim 29 or 30, wherein the first model requirement information comprises one or more of the following information: analytics filter information, a target of analytics reporting, model performance information, or model deployment environment information, wherein

the analytics filter information indicates an applicable range of a model that the second data analytics network element needs to request, and the analytics filter information comprises one or more of the following: an area, a time period, single network slice selection assistance information, or a data network name;

48

the target of analytics reporting indicates a terminal corresponding to the model that the second data analytics network element needs to request, and the target of analytics reporting comprises one or more of the following: an identifier of the terminal, an identifier of a terminal group, or information indicating any terminal;

the model performance information indicates performance of the model that the second data analytics network element needs to request, and the model performance information comprises one or more of the following: precision, accuracy, error rate, recall rate, F1 score, mean squared error, root mean squared error, root mean squared logarithmic error, mean absolute error, model inference duration, model robustness, model expandability, and model interpretability; and

the model deployment environment information indicates a hardware environment in which the model that the second data analytics network element needs to request is deployed, and the model deployment environment information comprises one or more of the following: a quantity of central processing units, a quantity of graphics processing units, a memory size, or a hard disk size.

33. A communication apparatus, comprising a processor, wherein the processor is coupled to a memory, the memory is configured to store a program or instructions, and when the program or the instructions are executed by the processor, the apparatus is enabled to perform the method according to any one of claims 1 to 9 or 24 to 28.

34. A communication apparatus, comprising a processor, wherein the processor is coupled to a memory, the memory is configured to store a program or instructions, and when the program or the instructions are executed by the processor, the apparatus is enabled to perform the method according to any one of claims 10 to 23.

35. A communication apparatus, comprising a processor, wherein the processor is coupled to a memory, the memory is configured to store a program or instructions, and when the program or the instructions are executed by the processor, the apparatus is enabled to perform the method according to any one of claims 29 to 32.

36. A chip system, comprising: at least one processor and an interface circuit, wherein the interface circuit is coupled to the at least one processor, and the processor performs the method according to any one of claims 1 to 9 or 24 to 28 by running instructions.

37. A chip system, comprising: at least one processor and an interface circuit, wherein the interface circuit is coupled to the at least one processor, and the processor performs the method according to any one of claims 10 to 23 by running instructions.

38. A chip system, comprising: at least one processor and an interface circuit, wherein the interface circuit is coupled to the at least one processor, and the processor performs the method according to any one of claims 29 to 32 by running instructions.

39. A communication system, comprising the first data analytics network element configured to perform the method according to any one of claims 1 to 9, and the second data analytics network element configured to perform the method according to any one of claims 10 to 17.

40. A communication system, comprising the first data analytics network element configured to perform the method according to any one of claims 24 to 28, and the second data analytics network element configured to perform the method according to any one of claims 18 to 23.

41. The system according to claim 40, wherein the system further comprises the network repository network element configured to perform the method according to any one of claims 29 to 32.

| NEF | NRF | PCF | UDM | AF |
|-----|-----|-----|-----|-----|

Nnef    Nnrf    Npcf    Nudm    Naf

Nausf    Nnwdaf    Namf    Nsmf

| AUSF | NWDAF | AMF | SMF |
|------|-------|-----|-----|

N1    N2    N4

| UE | RAN | UPF | DN |
|----|-----|-----|-----|

N3    N6

FIG. 1

FIG. 2

FIG. 3

NRF

Nnrf

Nnrf

Nnrf

| Training NWDAF | Nnwdaf | Inference NWDAF | Nnwdaf | NF |

Model training function

Model inference function

Service function

FIG. 4

| Training NWDAF | Inference NWDAF | NRF |
|---|---|---|

501: NF registration

502: NF registration

503: The inference NWDAF discovers the training NWDAF, and requests to obtain model information from the training NWDAF

504: NF status subscription

505: NF status subscription

**506: NF update request**

507: Update an NF profile

508: NF update response

509: NF status update notification

510: Determine that a model needs to be retrained

**511: NF update request**

512: NF status update notification

513: Start model retraining

514: NF update request

515: NF status update notification

516: Model request

**517: Model response**

518: Model update

**519: NF update request**

520: NF status update notification

FIG. 5

| Training NWDAF | Inference NWDAF 1 | Inference NWDAF 2 | NRF |
|---|---|---|---|

601: NF registration

602 to 613: Refer to step 502 to step 513 in Embodiment 1

614: NF update request

615: NF status update notification

615: NF status update notification

616: Determine whether a model needs to be updated

617: Model request

**618: Model response**

619: Model update

FIG. 6

| Training NWDAF | Inference NWDAF | NRF |
|---|---|---|

701: NF registration (model identifier)

702: NF registration (model identifier)

703: The inference NWDAF discovers the training NWDAF, and requests to obtain model information from the training NWDAF

704: NF status subscription

705: NF status subscription

**706: NF update request (model identifier)**

707: Update an NF profile

708: NF update response

709: NF status update notification (model identifier)

710: Determine that a model needs to be retrained

**711: NF update request (model identifier)**

712: NF status update notification (model identifier)

713: Start model retraining

714: NF update request (model identifier)

715: NF status update notification (model identifier)

716: Model request (model identifier)

**717: Model response**

718: Model update

**719: NF update request (model identifier)**

720: NF status update notification (model identifier)

FIG. 7

FIG. 8

| Training NWDAF | Inference NWDAF 1 | Inference NWDAF 2 | NRF |
|---|---|---|---|

901 to 905: Refer to step 801 to step 805 in Embodiment 4

Solution 1

906a: Model update request →

906b: Determine whether a model needs to be updated

906c: Model update request →

906d: Determine whether a model needs to be updated

Solution 2

907a: Model update request →

907b: Update the model

**907c: Model training completion notification** →

907d: Determine whether a model needs to be updated

←- - - - -907e: Model request- - - - - -

- - - - -**907f: Model response**- - - - →

907g: Update the model

FIG. 9

FIG. 10

Training NWDAF | Inference NWDAF | NRF

1101: NF registration

1102: The inference NWDAF discovers the training NWDAF, and requests to obtain model information from the training NWDAF

1103: NF status subscription

1104: Periodically start model retraining

1105: NF update request

1106: Update an NF profile

1107: NF update response

**1108: NF status update notification**

1109: Model request

**1110: Model response**

1111: Model update

FIG. 11

Training NWDAF    Inference NWDAF    NRF

1201: NF registration

1202: The inference NWDAF discovers the training NWDAF, and requests to obtain model information from the training NWDAF

1203: Periodically start model retraining

1204: Model update request

**1205: Model update response**

1206: Model update

FIG. 12

| First NWDAF | | Second NWDAF |
|---|---|---|

1301: Third information →

← 1302: First information

1303: Update first model information of a model based on a performance report of the model, to obtain second model information of the model

1304: Second information →

1305: Update the model

FIG. 13

Central server node

(2)

(1)

(3)

(3)

(1)

(3)

(1)

(4)

(4)

(4)

Edge client
node A

Edge client
node B

...

Edge client
node K

Original data

Original data

Original data

FIG. 14(a)

FIG. 14(b)

FIG. 14(c)

FIG. 15

1610

Processor

Memory

Interface

1620

1630

FIG. 16

## INTERNATIONAL SEARCH REPORT

| | International application No. |
|---|---|
| | **PCT/CN2021/085428** |

**A. CLASSIFICATION OF SUBJECT MATTER**

H04W 24/02(2009.01)i; H04L 12/24(2006.01)i

According to International Patent Classification (IPC) or to both national classification and IPC

**B. FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI; 3GPP: 模型, 训练, 推理, 推断, 性能, 更新, 分析, 机器学习, 网元, NWDAF, model, train+, inference, split+, provid+, consumer, update, NRF, performance

**C. DOCUMENTS CONSIDERED TO BE RELEVANT**

| Category* | Citation of document, with indication, where appropriate, of the relevant passages | Relevant to claim No. |
|---|---|---|
| X | ETRI. ""KI#19, Sol#56: Update to Add Model Update Service"" *SA WG2 Meeting #140E, S2-2005375,* 13 August 2020 (2020-08-13), full text, section 6.56 | 18-38, 40, 41 |
| X | CHINA MOBILE. ""KI #1, Sol #7: Update to Clarify the Solution"" *3GPP TSG-WG SA2 Meeting #140E, S2-2006228,* 02 September 2020 (2020-09-02), full text, section 6.7 | 18-38, 40, 41 |
| Y | ETRI. ""KI#19, Sol#56: Update to Add Model Update Service"" *SA WG2 Meeting #140E, S2-2005375,* 13 August 2020 (2020-08-13), full text, section 6.56 | 1-17, 33, 34, 36, 37, 39 |
| Y | US 2019294927 A1 (GUTTMANN MOSHE) 26 September 2019 (2019-09-26) description, paragraphs [0168]-[0192], figure 11 | 1-17, 33, 34, 36, 37, 39 |
| A | CN 111083722 A (ZTE CORPORATION) 28 April 2020 (2020-04-28) entire document | 1-41 |
| A | US 2020196155 A1 (VERIZON PATENT AND LICENSING INC.) 18 June 2020 (2020-06-18) entire document | 1-41 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 June 2021** | **23 June 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/085428**

| Patent document cited in search report | | | Publication date (day/month/year) | Patent family member(s) | | | Publication date (day/month/year) |
|---|---|---|---|---|---|---|---|
| US | 2019294927 | A1 | 26 September 2019 | None | | | |
| CN | 111083722 | A | 28 April 2020 | WO | 2020211722 | A1 | 22 October 2020 |
| US | 2020196155 | A1 | 18 June 2020 | US | 10750371 | B2 | 18 August 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2020117940 W